# EUROPÄISCHE PATENTSCHRIFT

(11) **EP 3 215 570 B1**
(45) Veröffentlichungstag und Bekanntmachung des Hinweises auf die Patenterteilung: **29.08.2018**
(21) Anmeldenummer: 15794120.4
(22) Anmeldetag: 05.11.2015
(51) Int. Cl.: C08L 83/08

(54) **VERNETZBARE ORGANOPOLYSILOXANZUSAMMENSETZUNGEN**
CROSSLINKABLE ORGANOPOLYSILOXANE COMPOSITIONS
COMPOSITIONS D'ORGANOPOLYSILOXANES RÉTICULABLES

(30) Priorität: 07.11.2014 DE 102014222826
(43) Veröffentlichungstag der Anmeldung: 13.09.2017
(73) Patentinhaber: Wacker Chemie AG, 81737 München (DE)
(72) Erfinder: SIXT, Torsten, 84561 Mehring (DE)
(74) Vertreter: Budczinski, Angelika
(86) Internationale Anmeldenummer: PCT/EP2015/075856
(87) Internationale Veröffentlichungsnummer: WO 2016/071469

(56) Entgegenhaltungen:
- EP-A1- 1 431 330
- EP-A1- 1 541 615
- WO-A1-03/068845
- WO-A1-2004/026944

## Beschreibung

Die Erfindung betrifft vernetzbare Massen auf der Basis von Organosiliciumverbindungen, welche bevorzugt zu Materialien mit abgesenktem Modul aushärten, Verfahren zu deren Herstellung sowie deren Verwendung.

Unter Ausschluss von Wasser lagerfähige, bei Zutritt von Wasser bei Raumtemperatur zu Elastomeren vulkanisierende Einkomponenten-Siliconkautschukmischungen (RTV1) sind bekannt. Diese Produkte werden in großen Mengen zum Beispiel als Fugendichtmassen in der Bauindustrie eingesetzt. Die Basis dieser RTV1-Mischungen sind Polydiorganosiloxane, die entweder durch OH-Gruppen oder durch Silylgruppen, die hydrolysierbare Gruppen tragen, terminiert sind. Durch die Kettenlänge der Polymere können wesentliche Eigenschaften der RTV1-Mischungen beeinflusst werden. Insbesondere der sogenannte Modul, meist angegeben als Sekantenmodul bei einer Dehnung von 100 %, lässt sich durch die Kettenlänge regulieren. Vor allem für Fugendichtmassen ist es erwünscht, dass dieser Modul niedrig ist, damit möglichst niedrige Kräfte auf die Fugenflanken einwirken. Aus ökonomischen und technischen Gründen steht jedoch für die Produktion von RTV1-Mischungen nur eine begrenzte Palette von Polymerkettenlängen zur Verfügung. Insbesondere die für sehr niedermodulige Dichtstoffe erforderlichen großen Kettenlängen führen zu sehr hohen Viskositäten der Polymere, so dass die anwendungsfertigen Produkte wegen der daraus resultierenden steifen Pastenkonsistenz hohe Auspresskräfte aus der Kartusche erfordern, damit also bei der Verarbeitung mit Nachteilen behaftet sind.

Einstellung bzw. Erniedrigung des Moduls ist in der Patentliteratur häufig beschrieben. CA 2056487 A2 schlägt vor, mono-alkoxyfunktionelle Endgruppen in das Polymer einzubauen. Diese reagieren praktisch nicht mehr und erniedrigen so den Modul. Nachteilig sind die latenten Alkoxygruppen insofern, als diese unter erhöhtem Temperatur- und Feuchteeinfluss doch noch Restaktivität zeigen und sich negativ auf die Vulkanisateigenschaften auswirken können.

EP-A 0776944 beschreibt monofunktionelle Siloxane, die über die nicht eingebundenen Enden eine Moduljustierung zeigen. Der Nachteil von CA 2056487 A2 ist damit zwar umgangen, eine separate zielgerichtete Herstellung solcher monofunktioneller Siloxane ist jedoch erforderlich.

Zur Umgehung dieser Schwierigkeiten wurde das Prinzip der Kettenverlängerung zur Moduljustierung verfolgt. In US-A 5,110,967 werden Si-N heterocyclische Silane beschrieben, solche speziellen Vernetzer sind jedoch nicht am Markt verfügbar. Weitere difunktionelle Silane wurden in US 5 290 826 (Bisacetamidosilane), DE 12 95 834 (Bisacetoxysilane), Bisaminosilane (EP 74 001) beschrieben, diese setzen allerdings basische bzw. saure Spaltprodukte frei und sind damit nicht für Oberflächen geeignet, die sich mit diesen Abspaltprodukten nicht vertragen. Das gilt beispielsweise für Marmor oder manche metallische Oberflächen. Kettenverlängerung mit Acetamidosilan oder Aminosilan ergibt darüber hinaus noch eine geruchliche Beeinträchtigung.

Difunktionelle Dialkyl-dialkoxysilane spalten zwar keine korrosiven Nebenprodukte ab, sind jedoch ungeeignet, da diese zu niedrige Reaktivität aufzeigen und nur in sehr hoher Dosierung einen nennenswerten Effekt zeigen, was kostenseitig nachteilig ist, siehe dazu US 5 300 612, US 5 470 934 und DE-A 198 55 619. Diesen Nachteil versucht EP-A 0575863B1 bzw. EP-A 0 693 533 über den Einsatz von kurzkettigen Siloxanen mit zwei kettenständigen Alkoxyfunktionen zu lösen, die jedoch gezielt hergestellt werden müssen und immer noch zu wenig reaktiv sind. Daher müssen auch diese in vergleichsweise großen Mengen eingesetzt werden. EP-A 1006146 beschreibt eine gemischte Endblockierung mit einer Mischung aus di- und trifunktionellen Alkoxysilanen, bei der ein moderater Modulerniedrigungseffekt nur unter Einsatz vergleichsweise großer Mengen an difunktionellem Dimethoxydimethylsilan erzielt werden kann. Dies erhöht den Gewichtsverlust, die Emission von Spaltprodukten und verschlechtert die Kostensituation.

JP 63-83167 beschreibt die Kettenverlängerung unter Verwendung difunkioneller α-aminosubstituierter Alkoxysilane mit deutlichen Effekten. Der Nachteil der Rezepturvorschläge ist jedoch die hohe Menge des difunktionellen α-Silans, was kostenseitig einerseits und in der Lagerbeständigkeit anderseits gravierende Nachteile zeigt. EP 1 735 369 B1 beschreibt Siloxane mit dem Merkmal besonders schnell vernetzender Zubereitungen. Diese basieren auf reiner α-Aminosilanfunktionalisierung oder auch gemischter Endblockierung mit sekundären α-Aminogruppen. Die Lagerstabilität im Vulkanisat ist jedoch schlecht.

EP-A 1431330 beschreibt einen Lösungsansatz, bei dem mit geringen Mengen von α-aminofunktionellen Alkoxysilanen gute Ergebnisse zur Moduljustierung erzielt werden konnten, die Lagerstabilität jedoch erst unter Zugabe von Isocyanatverbindungen stabilisiert werden konnte. Dies ist kritisch wegen der Toxizität von Isocyanaten und hat damit negative Auswirkungen auf die Herstellung und Handhabung von solchen Zubereitungen.

Ziel der Erfindung ist die Bereitstellung von vernetzbaren Zusammensetzungen, deren Modul durch gezielte Kettenverlängerung justiert werden kann, die weitgehend Isocyanatfrei sind und gleichzeitig lagerstabil und gut verarbeitbar sind.

Gegenstand der Erfindung sind vernetzbare Organopolysiloxanzusammensetzungen herstellbar unter Verwendung von
(A) Organosiliciumverbindungen enthaltend Einheiten der Formel

   [R¹₂NCR⁴₂]_{b}SiR³_{c}(OR²)ₐO_{(4-a-b-c)/2} (I),

   wobei
   R¹ gleich oder verschieden sein kann und einen einwertigen, gegebenenfalls substituierten Kohlenwasserstoffrest bedeutet,
   R² gleich oder verschieden sein kann und einen einwertigen, gegebenenfalls substituierten Kohlenwasserstoffrest bedeutet,
   R³ gleich oder verschieden sein kann und einen einwertigen Kohlenwasserstoffrest bedeutet,
   R⁴ gleich oder verschieden sein kann und Wasserstoffatom oder einen einwertigen, gegebenenfalls substituierten Kohlenwasserstoffrest bedeutet,
   a gleich 0, 1, 2 oder 3 ist,
   b 0, 1 oder 2 ist, bevorzugt 0 oder 1, und
   c 0, 1, 2 oder 3 ist,
   mit der Maßgabe, dass Organosiliciumverbindung (A) mindestens eine Einheit der Formel (I) mit a=b=c=1 aufweist, in mindestens 50 % der Einheiten der Formel (I) die Summe a+b+c=2 ist und die Organosiliciumverbindung mindestens 2 Gruppen -OR² enthält,
   gegebenenfalls (B) Silanen der Formel

      R¹₂NCR⁴₂SiR³(OR²)₂ (XI),
   wobei R¹, R², R³ und R⁴ gleich oder verschieden sein können und eine der oben angegebenen Bedeutungen haben,
(C) Silanen der Formel

   R⁶_{d}Si(OR⁷)_{4-d} (II)

   und/oder deren Teilhydrolysate mit bis zu 10 Siliciumatomen, wobei
   R⁶ eine für R³ angegebene Bedeutung hat,
   R⁷ gleich oder verschieden sein kann und einen einwertigen, gegebenenfalls substituierten Kohlenwasserstoffrest oder einen Rest -N=CR⁵₂ bedeutet,
   R⁵ gleich oder verschieden sein kann und eine für R² angegebene Bedeutung hat und
   d 0 oder 1 ist,
      und
(D) Organosiliciumverbindungen ausgewählt aus
(D1) Verbindungen enthaltend Einheiten der Formeln

   R⁸ₘSi(OR⁹)₃₋ₘO_{1/2} (III),

   R⁸ₘSi(OR⁹)₂₋ₘO_{2/2} (IV)

   und

   R⁸ₘSi(OR⁹)₁₋ₘO_{3/2} (V),

   wobei
   R⁸ gleich oder verschieden sein kann und jeweils unabhängig voneinander ein einwertiger Kohlenwasserstoffrest ist,
   R⁹ gleich oder verschieden sein kann und jeweils unabhängig voneinander ein einwertiger Kohlenwasserstoffrest bedeutet und m jeweils unabhängig voneinander die Bedeutung von 0 oder 1 hat,
   mit der Maßgabe, dass Verbindung (D1) pro Molekül mindestens 3 Gruppen -OR⁹ aufweist und ein gewichtsmittleres Molekulargewicht Mw von 1000 bis 3000 g/mol hat,
(D2) Verbindungen der Formel

   (R¹⁰O)₃Si-R¹¹-Si(OR¹⁰)₃ (VII),

   wobei
   R¹⁰ gleich oder verschieden sein kann und einen einwertigen, gegebenenfalls substituierten Kohlenwasserstoffrest, der mit Heteroatomen unterbrochen sein kann, darstellt,
   R¹¹ gleich oder verschieden sein kann und einen zweiwertigen, gegebenenfalls substituierten Kohlenwasserstoffrest, der mit Heteroatomen unterbrochen sein kann, darstellt,
   und
(D3) Verbindungen enthaltend Einheiten der Formeln

   R⁸₃SiO_{1/2} (XII),

   SiO_{4/2} (VI)

   und

   R⁸ₘSi(OR⁹)₁₋ₘO_{3/2} (V)

   sowie gegebenenfalls der Formeln (III) und (IV), wobei
   R⁸, R⁹ und m eine oben dafür angegebene Bedeutung hat,
   mit der Maßgabe, dass m gleich 0 ist, Verbindung (D3) pro Molekül mindestens 3 Gruppen -OR⁹ aufweist und ein gewichtsmittleres Molgewicht Mw von 1000 bis 4000g/mol hat.

Im Rahmen der vorliegenden Erfindung sollen von dem Begriff Organopolysiloxane sowohl polymere, oligomere wie auch dimere Siloxane mitumfasst werden, bei denen ein Teil der Siliciumatome auch durch andere Gruppen als Sauerstoff, wie etwa über -N- oder -C-, miteinander verbunden sein können.

Bei den erfindungsgemäß eingesetzten Organosiliciumverbindungen (A) kann es sich um beliebige und bisher bekannte Organopolysiloxane mit mindestens einem Si-gebundenen [R¹₂NCR⁴₂]-Rest handeln mit R¹ und R⁴ gleich der obengenannten Bedeutung.

Bevorzugt handelt es sich bei den erfindungsgemäß eingesetzten Organosiliciumverbindungen (A) um solche bestehend aus Einheiten der Formel (I).

Bevorzugt handelt es sich bei den erfindungsgemäß eingesetzten Organosiliciumverbindungen (A) um solche enthaltend Einheiten (Ia) -R₂SiO- und (Ib) [R¹₂NCR⁴₂]SiR³(OR²)O_{1/2} sowie gegebenenfalls (Ic) [R¹₂NCR⁴₂]SiR³O_{(2/2)}, wobei die Reste und Indizes die oben genannte Bedeutung haben.

In bevorzugt mindestens 80 %, besonders bevorzugt in 95 bis 99,9 %, aller Einheiten der Formel (I) in Organopolysiloxan (A) der Komponente (A), handelt es sich dabei um Einheiten der Formel (I) mit a=b=0 und c=2.

Die erfindungsgemäß eingesetzten Organopolysiloxane (A) weisen einen Gesamtgehalt an Si-gebundenen R²O-Gruppen von bevorzugt 400 bis 12000 Gew.-ppm, besonders bevorzugt von 500 bis 6000 Gew.-ppm, insbesondere 1000 bis 4000 Gew.-ppm, auf mit R² gleich der obengenannten Bedeutung.

Die erfindungsgemäß eingesetzten Organopolysiloxane (A) haben ein zahlenmittleres Molekulargewicht Mn bevorzugt im Bereich von 15000 bis 150000 g/mol, besonders bevorzugt von 30000 bis 125000 g/mol, insbesondere von 40000 bis 100000 g/mol.

Die erfindungsgemäß eingesetzten Organopolysiloxane (A) sind bevorzugt bei Raumtemperatur und dem Druck der umgebenden Atmosphäre, also zwischen 900 und 1100 hPa, flüssig.

Bei den erfindungsgemäß eingesetzten Organopolysiloxanen (A) handelt es sich um handelsübliche Produkte bzw. sind sie nach in der Chemie gängigen Methoden herstellbar.

Beispielsweise können die erfindungsgemäß eingesetzten Organopolysiloxane (A) durch Umsetzung von OH-Siloxanen mit Kettenverlängerern gegebenenfalls in Kombination mit Vernetzern umgesetzt werden.

Besonders bevorzugt handelt es sich bei den erfindungsgemäß eingesetzten Organosiliciumverbindungen (A) um solche herstellbar durch Umsetzung von Organosiliciumverbindungen mit mindestens zwei OH-Gruppen (A0) mit Silanen (B) und Silanen (C') der Formeln R³Si(OR²)₃ oder Si(OR²)₄ gegebenenfalls in Anwesenheit von Katalysator (K) sowie gegebenenfalls weiteren Stoffen, wobei R² und R³ eine der oben dafür angegebenen Bedeutungen haben.

Bevorzugt handelt es sich bei den Organosiliciumverbindungen mit mindestens zwei OH-Gruppen (A0) um im Wesentlichen lineare, beidseitig mit Si-gebundenen Hydroxygruppen terminierte Organopolysiloxane.

Bevorzugt haben Organosiliciumverbindungen (A0) einen OH-Gehalt von bevorzugt 230 bis 25000 Gew.-ppm, besonders bevorzugt von 250 bis 1250 Gew.-ppm, insbesondere von 300 bis 1000 Gew.-ppm.

Besonders bevorzugt handelt es sich bei Organosiliciumverbindungen (A0) um solche der Formel

HO (R₂SiO)ₙH (VIII),

wobei
R gleich oder verschieden sein kann und einen einwertigen, gegebenenfalls substituierten Kohlenwasserstoffrest bedeutet und n eine ganze Zahl von 200 bis 2000, bevorzugt von 400 bis 1700, insbesondere von 500 bis 1500, ist, insbesondere um α,ω-Di-hydroxydialkylpolysiloxane, ganz besonders bevorzugt um α,ω-Dihydroxypolydimethylsiloxane.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, und Dodecylreste, wie der n-Dodecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenylrest; Alkarylreste, wie o-, m-, p-Tolylreste; und Aralkylreste, wie der Benzylrest, der α- und der β-Phenylethylrest.

Beispiele für substituierte Reste R sind Halogenalkylreste, wie der Chloromethylrest, der 3,3,3-Trifluor-n-propylrest, der 2,2,2,2',2',2'-Hexafluor-isopropylrest, der Heptafluorisopropylrest und Halogenarylreste, wie der o-, m- und p-Chlorphenylrest, sowie alle oben genannten Reste, die mit epoxyfunktionellen Gruppen, Carboxygruppen, Enamingruppen, Aminogruppen, Aminoethylaminogruppen, Aryloxygruppen, Acryloxygruppen, Methacryloxygruppen, Hydroxygruppen und Halogengruppen substituiertsind.

Bevorzugt handelt es sich bei Rest R um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen oder (Poly)¬glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest.

Beispiele für Organosiliciumverbindungen (A0) sind

(HO)Me₂SiO[SiMe_{2O}]ₓSiMe₂(OH),

(HO)Me₂SiO[SiMe₂O]ₓ[SiMePhO]_{y}SiMe₂(OH)

und

(HO)Me₂SiO[SiMe₂O]ₓ[SiPh₂O]_{y}SiMe₂(OH)

mit Me gleich Methylrest und Ph gleich Phenylrest, wobei die einzelnen Einheiten statistisch im Molekül verteilt sein können, wobei x eine Zahl von 200 bis 2000, bevorzugt 300 bis 1100, besonders bevorzugt 500 bis 1500, beträgt und y eine solche Zahl darstellt, dass y/x bevorzugt 0,01 bis 0,1 ist.

Die erfindungsgemäß eingesetzten Organosiliciumverbindungen (A0) haben eine Viskosität von bevorzugt 1000 bis 700 000 mPas, besonders bevorzugt von 6000 bis 400 000 mPas, insbesondere von 10 000 bis 250 000 mPas, jeweils bei 25 °C.

Bei den Organosiliciumverbindungen (A0) handelt es sich um handelsübliche Produkte bzw. können diese nach in der Siliciumchemie gängigen Methoden hergestellt werden.

Beispiele für Reste R¹, R², R³ und R⁴ sind die für Rest R angegebenen Beispiele.

Bevorzugt handelt es sich bei Rest R¹ um Alkylreste mit 1 bis 6 Kohlenstoffatomen, besonders bevorzugt um den Ethyl-, n-Propyl-, n-Butyl-, Isopropyl- oder Isobutylrest, insbesondere um den Ethyl-, n-Propyl oder n-Butylrest.

Bevorzugt handelt es sich bei Rest R² um Alkylreste mit 1 bis 6 Kohlenstoffatomen, besonders bevorzugt um den Methyl- und Ethylrest.

Bevorzugt handelt es sich bei Rest R³ um einwertige Kohlenwasserstoffreste mit 1 bis 18 Kohlenstoffatomen, besonders bevorzugt um Alkylreste mit 1 bis 12 Kohlenstoffatomen, insbesondere um den Methylrest.

Bevorzugt handelt es sich bei Rest R⁴ um Wasserstoffatom und Kohlenwasserstoffreste mit 1 bis 20 Kohlenstoffatomen, insbesondere um Wasserstoffatom.

Beispiele für die erfindungsgemäß eingesetzten Silane (B) sind (H₃C)₂N-CH₂-Si(CH₃)(OCH₃)₂, (H₃C)₂N-CH₂-Si(CH₃)(OCH₂CH₃)₂, (H₃C-CH₂)₂N-CH₂-Si(CH₃)(OCH₃)₂, (H₃C-CH₂)₂N-CH₂-Si(CH₃)(OCH₂CH₃)₂, (CH₃-(CH₂)₂)₂N-CH₂-Si(CH₃)(OCH₃)₂, (CH₃-(CH₂)₂)₂N-CH₂-Si(CH₃)(OCH₂CH₃)₂, ((CH₃)₂CH)₂N-CH₂-Si(CH₃)(OCH₃)₂, ((CH₃)₂CH)₂N-CH₂-Si(CH₃)(OCH₂CH₃)₂, (CH₃-(CH₂)₃)₂N-CH₂-Si(CH₃)(OCH₃)₂, (CH₃-(CH₂)₃)₂N-CH₂-Si(CH₃)(OCH₂CH₃)₂, (CH₃CH₂(CH₃)CH)₂N-CH₂-Si(CH₃)(OCH₃)₂, (CH₃CH₂(CH₃)CH)₂N-CH₂-Si(CH₃)(OCH₂CH₃)₂, C₆H₅(CH₃)N-CH₂-Si(CH₃)(OCH₂CH₃)₂, C₆H₅(CH₃)N-CH₂-Si(CH₃)(OCH₃)₂, C₆H₁₁(CH₃)N-CH₂-Si(CH₃)(OCH₂CH₃)₂ und C₆H₁₁(CH₃)N-CH₂-Si(CH₃)(OCH₃)₂.

Bevorzugt handelt es sich bei den erfindungsgemäß eingesetzten Silanen (B) um (CH₃-(CH₂)₃)₂N-CH₂-Si(CH₃)(OCH₃)₂, (CH₃-(CH₂)₃)₂N-CH₂-Si(CH₃)(OCH₂CH₃)₂, (H₃C-CH₂)₂N-CH₂-Si(CH₃)(OCH₂CH₃)₂, (H₃C-CH₂)₂N-CH₂-Si(CH₃)(OCH₃)₂, (CH₃-(CH₂)₂)₂N-CH₂-Si(CH₃)(OCH₃)₂, (CH₃-(CH₂)₂)₂N-CH₂-Si(CH₃)(OCH₂CH₃)₂, ((CH₃)₂CH)₂N-CH₂-Si(CH₃)(OCH₃)₂ und ((CH₃)₂CH)₂N-CH₂-Si(CH₃)(OCH₂CH₃)₂, besonders bevorzugt um (H₃C-CH₂)₂N-CH₂-Si(CH₃)(OCH₂CH₃)₂, (H₃C-CH₂)₂N-CH₂-Si(CH₃)(OCH₃)₂, (CH₃-(CH₂)₃)₂N-CH₂-Si(CH₃)(OCH₃)₂ und (CH₃-(CH₂)₃)₂N-CH₂-Si(CH₃)(OCH₂CH₃)₂.

Zur Herstellung der erfindungsgemäß eingesetzten Komponente (A) werden Kettenverlängerer (B) bevorzugt in solchen Mengen eingesetzt, dass das molare Verhältnis von Komponente (B) zu Si-OH in Komponente (A0) kleiner 1, bevorzugt kleiner 0,6 und besonders bevorzugt kleiner 0,4, beträgt. Das molare Verhältnis von Komponente (B) zu Si-OH in Komponente (A0) ist bevorzugt größer 0,005, besonders bevorzugt größer 0,01.

Die erfindungsgemäß eingesetzten Silane (B) sind handelsübliche Verbindungen bzw. nach in der Chemie gängigen Verfahren herstellbar.

Beispiele für die erfindungsgemäß eingesetzten Silane (C') sind Tetraalkoxysilane und Organyltrialkoxysilane, wie Methyltrimethoxysilan, Ethyltrimethoxysilan, n-Propyltrimethoxysilan, Vinyltrimethoxysilan, Methyltriethoxysilan, Ethyltriethoxysilan, n-Propyltriethoxysilan und Vinyltriethoxysilan, sowie Organyltrioximosilane, wie Methyltris(methylethylketoximo)silan und Vinyltris(methylethylketoximo)silan, sowie die Teilhydrolysate der vorgenannten Silane mit maximal 10 Siliciumatomen.

Bevorzugt handelt es sich bei den erfindungsgemäß eingesetzten Silanen (C') um Organyltrialkoxysilane und/oder deren Teilhydrolysate mit maximal 10 Siliciumatomen, besonders bevorzugt um Methyltrimethoxysilan und Vinyltrimethoxysilan sowie die Teilhydrolysate der vorgenannten Silane mit maximal 10 Siliciumatomen.

Zur Herstellung der erfindungsgemäß eingesetzten Komponente (A) werden Silane (C') bevorzugt in Mengen von 1 bis 5 Gewichtsteilen, besonders bevorzugt 1,5 bis 2,5 Gewichtsteilen, eingesetzt, jeweils bezogen auf 100 Gewichtsteile Komponente (A0).

Bevorzugt wird die erfindungsgemäße Herstellung der Komponente (A) in Anwesenheit von Katalysator (K) durchgeführt.

Beispiele für die gegebenenfalls eingesetzten Katalysatoren (K) sind alle Katalysatoren, die auch bisher bei Reaktionen von Si-gebundenen Organyloxy-Gruppen mit Si-OH-Gruppen eingesetzt worden sind.

Bevorzugt handelt es sich bei den erfindungsgemäß gegebenenfalls eingesetzten Katalysatoren (K) um Metallchelate und Phosphorsäureester, besonders bevorzugt um Titanchelate, Zinkacetylacetonat, Aluminiumacetylacetonat, 2-Ethylhexylphosphat, Di(2-ethylhexyl)phosphat und Diethylamin, Di-n-propylamin, Di-n-butylamin, Di-n-hexylamin, Diisopropylamin, Diisobutylamin, Diisohexylamin oder Aminoalkylsilane wie Aminopropyltrimethoxysilan, Aminopropyltriethoxysilan, Aminoethyl-aminopropyltrimethoxysilan oder Aminoethyl-aminopropyltriethoxysilan und/oder deren Kombinationen, besonders bevorzugt um Zinkacetylacetonat, Aluminiumacetylacetonat, Di-n-propylamin, Di-n-butylamin, Di-n-hexylamin, Diisopropylamin, Diisobutylamin, Diisohexylamin oder deren Kombinationen.

Falls zur Herstellung von Siloxanen (A) Katalysatoren (K) eingesetzt werden, was bevorzugt ist, handelt es sich um Mengen von bevorzugt 0,001 bis 1 Gewichtsteilen, besonders bevorzugt 0,005 bis 0,1 Gewichtsteilen, jeweils bezogen auf 100 Gewichtsteile Komponente (A0).

Die Herstellung der erfindungsgemäß eingesetzten Komponente (A) findet bevorzugt unter Ausschluss von Feuchtigkeit bei Temperaturen von 10 bis 100 °C, bevorzugt 20 bis 80 °C, bei Drücken zwischen 0,1 bis 10 Atmosphären, bevorzugt zwischen 0,8 bis 8 Atmosphären, statt.

Falls die Herstellung der erfindungsgemäß eingesetzten Komponente (A) in Anwesenheit einer Gasphase stattfindet, also in Form eines offenen oder teilbefüllten Reaktionsraums, so erfolgt die Herstellung bevorzugt unter Ausschluss von Feuchtigkeit, überspült oder überlagert mit getrockneter Luft oder getrocknetem Stickstoff, bei Temperaturen zwischen 10 und 60 °C, besonders bevorzugt zwischen 20 und 50 °C, und bei Drücken zwischen 0,1 und 1 Atmosphären, besonders bevorzugt zwischen 0,6 bis 1 Atmosphären.

Falls die Herstellung der erfindungsgemäß eingesetzten Komponente (A) in einer geschlossenen Anlage in Abwesenheit einer Gasphase stattfindet, also in Form eines weitgehend befüllten Reaktionsraumes mit einem Füllgrad von größer 90 %, erfolgt die Herstellung bevorzugt bei Temperaturen zwischen 10 und 80 °C, besonders bevorzugt zwischen 20 und 60 °C, und bei Drücken zwischen 0,1 und 8 Atmosphären, besonders bevorzugt zwischen 0,8 bis 6 Atmosphären.

Insbesondere handelt es sich bei den erfindungsgemäß eingesetzten Organosiliciumverbindungen (A) um solche herstellbar durch Umsetzung von Organosiliciumverbindungen mit mindestens zwei OH-Gruppen (A0) mit Silanen (B) und Silanen (C') der Formel R³Si(OR²)₃ in Anwesenheit von Katalysator (K), wobei (B) in solchen Mengen eingesetzt wird, dass das molare Verhältnis von Komponente (B) zu Si-OH in Komponente (A0) kleiner 1, bevorzugt kleiner 0,6 und besonders bevorzugt kleiner 0,4 beträgt, wobei R² die oben dafür angegebene Bedeutung hat.

Bevorzugt werden dabei die Silane in einem molaren Verhältnis von Silanen (C') zu Kettenverlängerern (B) von größer 20:1, besonders bevorzugt größer 30:1, insbesondere bevorzugt größer 40:1 eingesetzt. Das molare Verhältnis von Silanen (C') zu Kettenverlängerern (B) ist bevorzugt kleiner 800:1, besonders bevorzugt kleiner 300:1, insbesondere kleiner 150:1.

Beispiele für erfindungsgemäß eingesetzte Organopolysiloxane (A) sind
(Et₂NCH₂)(Me)(OMe)SiO-[SiMe₂O]_{z}SiMe₂-O-Si(Me)(OMe)₂,
(Et₂NCH₂)(Me)(OMe)SiO-[SiMe₂O]_{z}SiMe₂-O-Si(Vi)(OMe)₂,
(BU₂NCH₂)(Me)(OMe)SiO-[SiMe₂O]_{z}SiMe₂-O-Si(Me)(OMe)₂,
(BU₂NCH₂)(Me)(OMe)SiO-[SiMe₂O]_{z}SiMe₂-O-Si(Vi)(OMe)₂,
(Et₂NCH₂)(Me)(OMe)SiO-[SiMe₂O]_{z}SiMe₂-O-Si(Me)(OEt)₂,
(Et₂NCH₂)(Me)(OMe)SiO-[SiMe₂O]_{z}SiMe₂-O-Si(Vi)(OEt)₂,
(BU₂NCH₂)(Me)(OMe)SiO-[SiMe₂O]_{z}SiMe₂-O-Si(Me)(OEt)₂,
(BU₂NCH₂)(Me)(OMe)SiO-[SiMe₂O]_{z}SiMe₂-O-Si(Vi)(OEt)₂,
(Et₂NCH₂)(Me)(OEt)SiO-[SiMe₂O]_{z}SiMe₂-O-Si(Me)(OMe)₂,
(Et₂NCH₂)(Me)(OEt)SiO-[SiMe₂O]_{z}SiMe₂-O-Si(Vi) (OMe)₂,
(BU₂NCH₂)(Me)(OEt)SiO-[SiMe₂O]_{z}SiMe₂-O-Si(Me)(OMe)₂,
(BU₂NCH₂)(Me)(OEt)SiO-[SiMe₂O]_{z}SiMe₂-O-Si(Vi)(OMe)₂,
(Et₂NCH₂)(Me)(OEt)SiO-[SiMe₂O]_{z}SiMe₂-O-Si(Me)(OEt)₂,
(Et₂NCH₂)(Me)(OEt)SiO-[SiMe₂O]_{z}SiMe₂-O-Si(Vi)(OEt)₂,
(BU₂NCH₂)(Me)(OEt)SiO-[SiMe₂O]_{z}SiMe₂-O-Si(Me)(OEt)₂ und
(BU₂NCH₂)(Me)(OEt)SiO-[SiMe₂O]_{z}SiMe₂-O-Si(Vi)(OEt)₂,
(Vi)(MeO)₂SiO-[SiMe₂O]_{z}(BU₂NCH₂)(Me)SiO-[SiMe₂O]_{z}SiMe₂-O-Si(Vi)(OMe)₂,
(Vi)(MeO)₂SiO-[SiMe₂O]_{z}(Et₂NCH₂)(Me)SiO-[SiMe₂O]_{z}SiMe₂-O-Si(Vi)(OMe)₂,
(Me)(MeO)₂SiO-[SiMe₂O]_{z}(Bu₂NCH₂)(Me)SiO-[SiMe₂O]_{z}SiMe₂-O-Si(Vi)(OMe)₂ und
(Me)(MeO)₂SiO-[SiMe₂O]_{z}(Bu₂NCH₂)(Me)SiO-[SiMe₂O]_{z}SiMe₂-O-Si(Me)(OMe)₂,
wobei
(Et₂NCH₂)(Me)(OMe)SiO-[SiMe₂O]_{z}SiMe₂-O-Si(Me)(OMe)₂,
(Et₂NCH₂)(Me)(OMe)SiO-[SiMe₂O]_{z}SiMe₂-O-Si(Vi)(OMe)₂,
(BU₂NCH₂)(Me)(OMe)SiO-[SiMe₂O]_{z}SiMe₂-O-Si(Me)(OMe)₂ und
(BU₂NCH₂)(Me)(OMe)SiO-[SiMe₂O]_{z}SiMe₂-O-Si(Vi)(OMe)₂,
(Vi)(MeO)₂SiO-[SiMe₂O]_{z}Bu₂NCH₂)(Me)SiO-[SiMe₂O]_{z}SiMe₂-O-Si(Vi)(OMe)₂ und
(Vi)(MeO)₂SiO-[SiMe₂O]_{z}(Et₂NCH₂)(Me)SiO-[SiMe₂O]_{z}SiMe₂-O-Si(Vi)(OMe)₂
bevorzugt sind mit Me gleich Methylrest, Et gleich Ethylrest, Bu gleich Butylrest und Vi gleich Vinylrest mit einer Anzahl von Wiederholungseinheiten z von 200 bis 2000, bevorzugt 300 bis 1500 und besonders bevorzugt 500 bis 1100.

Zur Bereitung der erfindungsgemäßen, vernetzbaren Zusammensetzungen werden bevorzugt keine Silane (B) eingesetzt.

Falls zur Bereitung der erfindungsgemäßen Massen Silane (B) eingesetzt werden, handelt es sich um Mengen von bevorzugt maximal 1,0 Gewichtsteilen, besonders bevorzugt 0,1 bis 0,5 Gewichtsteilen, jeweils bezogen auf 100 Gewichtsteile Komponente (A) .

Beispiele für Rest R⁶ sind die oben für Rest R angegebenen Beispiele für Kohlenwasserstoffreste.

Bevorzugt handelt es sich bei Rest R⁶ um einwertige Kohlenwasserstoffreste mit 1 bis 18 Kohlenstoffatomen, besonders bevorzugt um Alkylreste mit 1 bis 12 Kohlenstoffatomen, insbesondere um den Methyl- und Vinylrest.

Beispiele für Rest R⁵ sind die oben für Rest R angegebenen Beispiele.

Bevorzugt handelt es sich bei Rest R⁵ um einwertige Kohlenwasserstoffreste mit 1 bis 18 Kohlenstoffatomen, besonders bevorzugt um den Methyl-, Ethyl-, Propyl-, Isopropyl- oder Isobutylrest.

Beispiele für Rest R⁷ sind die oben für Rest R angegebenen Beispiele sowie -N=C(CH₃)(C₂H₅), -N=C(CH₃)₂, -N=C(CH₃)(C₃H₇) und -N=C(CH₃)(C₄H₉).

Bevorzugt handelt es sich bei Rest R⁷ um Alkylreste sowie Reste -N=CR⁵₂, besonders bevorzugt um Alkylreste mit 1 bis 6 Kohlenstoffatomen, insbesondere um den Methyl- und Ethylrest.

In Formel (II) hat d bevorzugt die Bedeutung von 1.

Beispiele für erfindungsgemäß eingesetzte Silane (C) sind die für Komponente (C') oben angegebenen Beispiele.

Bevorzugt handelt es sich bei den erfindungsgemäß eingesetzten Silanen (C) um Organyltrialkoxysilane und/oder deren Teilhydrolysate mit maximal 10 Siliciumatomen, besonders bevorzugt um Methyltrimethoxysilan und Vinyltrimethoxysilan sowie die Teilhydrolysate der vorgenannten Silane mit maximal 10 Siliciumatomen.

Falls als Komponente (C) Teilhydrolysate von Silanen der Formel (II) eingesetzt werden, handelt es sich bevorzugt um solche mit maximal 6 Siliciumatomen.

Falls zur Herstellung von Komponente (A) Silane (C') eingesetzt werden, handelt es sich besonders bevorzugt bei Komponente (C) um die gleichen Silane.

Zur Bereitung der erfindungsgemäßen Zusammensetzungen werden Silane (C) und/oder deren Teilhydrolysate mit maximal 10 Siliciumatomen in Mengen von bevorzugt 1 bis 20 Gewichtsteilen, besonders bevorzugt 1,5 bis 7 Gewichtsteilen, eingesetzt, jeweils bezogen auf 100 Gewichtsteile Komponente (A).

Beispiele für Reste R⁸ und R⁹ sind die oben für Rest R angegebenen Beispiele.

Bevorzugt handelt es sich bei Rest R⁸ um den Methyl-, Ethyl-, Propyl- oder Phenylrest, besonders bevorzugt um den Methyl- oder Phenylrest, insbesondere um den Methylrest.

Bevorzugt handelt es sich bei Rest R⁹ um den Methyl-, Ethyl- oder Propylrest, besonders bevorzugt um den Methyl- oder Ethylrest, insbesondere um den Ethylrest.

Bevorzugt hat m die Bedeutung von 1.

Die erfindungsgemäß eingesetzten Verbindungen (D1) enthalten Einheiten der Formeln (III), (IV) und (V) in Mengen von insgesamt bevorzugt mindestens 80 Mol-%, besonders bevorzugt mindestens 95 Mol-%, insbesondere mindestens 98,5 Mol-%.

Die erfindungsgemäß eingesetzten Verbindungen (D1) enthalten mindestens 20 Mol-% Einheiten der Formel (V), wobei 20 bis 60 Mol-% bevorzugt und 25 bis 50 Mol-% besonders bevorzugt sind.

Die erfindungsgemäß eingesetzten Verbindungen (D1) enthalten bevorzugt 5 bis 30 Mol-% Einheiten der Formel (III).

Die erfindungsgemäß eingesetzten Verbindungen (D1) enthalten bevorzugt 20 bis 50 Mol-% Einheiten der Formel (IV).

Die erfindungsgemäß eingesetzten Verbindungen (D1) enthalten bevorzugt 20 bis 60 Mol-% Einheiten der Formel (V), 5 bis 30 Mol-% Einheiten der Formel (III) und 20 bis 50 Mol-% Einheiten der Formel (IV).

Die erfindungsgemäß eingesetzten Verbindungen (D1) können außer den Einheiten der Formeln (III), (IV) und (V) auch noch weitere Einheiten enthalten, wie z.B. SiO_{4/2} (VI), R⁸₂Si (OR⁹)O_{1/2} (IX) oder R⁸₂SiO_{2/2} (X), jeweils mit R⁸ und R⁹ gleich einer der obengenannten Bedeutungen.

Bevorzugt bestehen die erfindungsgemäß eingesetzten Verbindungen (D1) aus Einheiten der Formeln (III), (IV), (V) und gegebenenfalls (VI), gegebenenfalls (IX) sowie gegebenenfalls (X).

Bevorzugt enthält Verbindung (D1) pro Molekül mindestens 5 Gruppen -OR⁹ mit R⁹ gleich der obengenannten Bedeutung.

Bevorzugt handelt es sich bei den erfindungsgemäß eingesetzten Verbindungen (D1) um harzartige Produkte, besonders bevorzugt um bei Raumtemperatur und einem Druck von 1013 hPa flüssige Siliconharze, womit die technische Einsetzbarkeit wesentlich erleichtert wird.

Die erfindungsgemäß eingesetzten Verbindungen (D1) haben eine Viskosität von bevorzugt 1 bis 100 mPa·s, besonders bevorzugt 10 bis 40 mPa·s, insbesondere von 15 bis 30 mPa·s, jeweils bei 25 °C.

Die erfindungsgemäß eingesetzten Verbindungen (D1) haben eine Dichte von bevorzugt 0,9 bis 1,3 g/cm³, besonders bevorzugt 0,95 bis 1,20 g/cm³, insbesondere von 1,05 bis 1,18 g/cm³, jeweils bei 25 °C.

Wenngleich durch die Formeln (III), (IV), (V) und (IX) nicht ausgedrückt, können die erfindungsgemäß eingesetzten Verbindungen (D1) herstellungsbedingt bis zu 1 Gew.-%, bevorzugt kleiner 0,8 Gew.-%, besonders bevorzugt kleiner 0,5 Gew.-%, Rest-Si-OH als Verunreinigung enthalten.

Die erfindungsgemäß eingesetzten Verbindungen (D1) haben ein Gewichtsmittel Mw von bevorzugt 2000 bis 3000 g/mol.

Bei den Organosiliciumverbindungen (D1) handelt es sich um handelsübliche Produkte bzw. können sie nach in der Siliciumchemie gängigen Methoden hergestellt werden. Beispielsweise können die erfindungsgemäß eingesetzten Verbindungen (D1) durch Hydrolyse und anschließende Kondensation von Alkyltrialkoxysilanen hergestellt werden. Bevorzugt werden sie aus Methyl-, Ethyl- und Vinyltrialkoxysilanen hergestellt, wobei Methoxy- und Ethoxysilane besonders bevorzugt sind.

Falls zur Herstellung der erfindungsgemäßen Massen Komponente (D1) eingesetzt wird, handelt es sich um Mengen von vorzugsweise 0,01 bis 50 Gewichtsteilen, besonders bevorzugt 0,1 bis 20 Gewichtsteilen, insbesondere 1 bis 10 Gewichtsteilen, jeweils bezogen auf 100 Gewichtsteile Komponente (A).

Zur Herstellung der erfindungsgemäßen Massen können Verbindungen (D1) direkt eingesetzt werden oder im Gemisch mit niedrigsiedenden organischen Lösungsmitteln, wie Alkoholen oder Toluol. Falls Verbindungen (D1) im Gemisch mit organischen Lösungsmitteln eingesetzt werden, was nicht bevorzugt ist, handelt es sich um Mengen von bevorzugt maximal 5 Gew.-%, bezogen auf das Gesamtgewicht des Gemisches.

Beispiele für Rest R¹⁰ sind die für Rest R oben angegebenen Beispiele.

Bevorzugt handelt es sich bei Rest R¹⁰ um Alkylreste mit 1 bis 4 Kohlenstoffatomen, besonders bevorzugt um den Methyl- oder den Ethylrest.

Beispiele für zweiwertige Reste R¹¹ sind Alkylenreste, wie der Ethylen-, n-Propylen-, iso-Propylen-, n-Butylen-, iso-Butylen-, n-Pentylen-, iso-Pentylen-, Hexylenreste, wie der n-Hexylenrest, Heptylenreste, wie der n-Heptylenrest, Octylenreste, wie der n-Octylenrest und iso-Octylenreste, Nonylenreste, wie der n-Nonylenrest, Decylenreste, wie der n-Decylenrest, Dodecylenreste, wie der n-Dodecylenrest; Alkenylenreste, wie der Vinylenrest, Propyliden- oder Butylidenrest; Cycloalkylenreste, wie Cyclopentylen-, Cyclohexylen-, Cycloheptylenreste und Methylcyclohexylenreste; sowie Arylenreste, wie der Phenylenrest.

Bevorzugt handelt es sich bei den Resten R¹¹ um Ethylen-, n-Butylen- oder Vinylenreste.

Beispiele für Organosiliciumverbindungen (D2) sind 1,2-Bis(triethoxysilyl)ethan, 1,1-Bis(triethoxysilyl)ethan, 1,2-Bis(trimethoxysilyl)ethan, 1,1-Bis(trimethoxysilyl)ethan, 1,4-Bis(triethoxysilyl)butan, 1,4-Bis(trimethoxysilyl)butan, 1,2-Bis(triethoxysilyl)ethen, 1,1-Bis(triethoxysilyl)ethen, 1,2-Bis(trimethoxysilyl)ethen und 1,1-Bis(trimethoxysilyl)-ethen.

Bevorzugt handelt es sich bei Organosiliciumverbindungen (D2) um 1,2-Bis(triethoxysilyl)ethan, 1,1-Bis(triethoxysilyl)ethan, 1,2-Bis(trimethoxysilyl)ethan oder 1,1-Bis(trimethoxysilyl)-ethan oder 1,2-bis(triethoxysilyl)ethen oder 1,2-Bis(tri-methoxysilyl)ethen

Falls zur Herstellung der erfindungsgemäßen Massen Komponente (D2) eingesetzt wird, handelt es sich um Mengen von vorzugsweise 0,05 bis 3 Gewichtsteilen, besonders bevorzugt 0,1 bis 2 Gewichtsteilen, insbesondere 0,1 bis 1 Gewichtsteilen, jeweils bezogen auf 100 Gewichtsteile Komponente (A).

Die erfindungsgemäß eingesetzten Verbindungen (D3) enthalten Einheiten der Formeln (XII), (VI) und (V) sowie gegebenenfalls (III) und gegebenenfalls (IV) in Mengen von insgesamt bevorzugt mindestens 80 Mol-%, besonders bevorzugt mindestens 95 Mol-%, insbesondere mindestens 98,5 Mol-%.

Die erfindungsgemäß eingesetzten Verbindungen (D3) enthalten bevorzugt 35 bis 70 Mol-% Einheiten der Formel (XII), besonders bevorzugt 45 bis 65 Mol-%, insbesondere 50 bis 63 Mol-%.

Die erfindungsgemäß eingesetzten Verbindungen (D3) enthalten bevorzugt 25 bis 60 Mol-% Einheiten der Formel (VI), besonders bevorzugt 30 bis 50 Mol-%, insbesondere 35 bis 48 Mol-%.

Die erfindungsgemäß eingesetzten Verbindungen (D3) enthalten bevorzugt 0,5 bis 10 Mol-% Einheiten der Formel (V) mit m gleich 0, besonders bevorzugt in Mengen von 2 bis 8 Mol-%, insbesondere in Mengen von 2 bis 6 Mol-%.

Die erfindungsgemäß eingesetzten Verbindungen (D3) enthalten bevorzugt 35 bis 70 Mol-% Einheiten der Formel (XII), 25 bis 60 Mol-% Einheiten der Formel (VI) und 0,5 bis 10 Mol-% Einheiten der Formel (V) mit m gleich 0.

Besonders bevorzugt enthalten die Verbindungen (D3) 45 bis 65 Mol-% Einheiten der Formel (XII), 2 bis 8 Mol-% Einheiten der Formel (V) mit der Bedeutung m = 0 sowie 30-50 Mol-% Einheiten der Formel (VI).

Die erfindungsgemäß eingesetzten Verbindungen (D3) können außer den Einheiten der Formeln (XII), (V) mit m=0 und (VI) sowie gegebenenfalls (III) und gegebenenfalls (IV) auch noch weitere Einheiten enthalten, wie z.B. R⁸₂Si (OR⁹)O_{1/2} (IX) oder R⁸₂SiO_{2/2} (X), jeweils mit R⁸ und R⁹ gleich einer der obengenannten Bedeutungen.

Bevorzugt bestehen die erfindungsgemäß eingesetzten Verbindungen (D3) aus Einheiten der Formeln (XII), (VI) und (V) sowie gegebenenfalls (III), gegebenenfalls (IV), gegebenenfalls (IX) und gegebenenfalls (X).

Bevorzugt handelt es sich bei den erfindungsgemäß eingesetzten Verbindungen (D3) um harzartige Produkte, besonders bevorzugt um bei Raumtemperatur und einem Druck von 1013 hPa flüssige oder in Siliconöl oder Silanen (C) lösliche Siliconharze, womit die technische Einsetzbarkeit wesentlich erleichtert wird.

Die erfindungsgemäß eingesetzten Verbindungen (D3) haben eine Viskosität von bevorzugt 0,1 bis 200 Pa·s, besonders bevorzugt 0,10 bis 100 Pa·s.

Die erfindungsgemäß eingesetzten Verbindungen (D3) haben eine Dichte von bevorzugt 0,9 bis 1,3 g/cm³, besonders bevorzugt 0,95 bis 1,20 g/cm³, insbesondere von 1,0 bis 1,15 g/cm³, jeweils bei 25 °C

Wenngleich durch die Formeln (III), (IV), (V) und (IX) nicht ausgedrückt, können die erfindungsgemäß eingesetzten Verbindungen (D3) herstellungsbedingt bis zu 1 Gew.-%, bevorzugt kleiner 0,8 Gew.-%, besonders bevorzugt kleiner 0,5 Gew.-%, insbesondere maximal 2500 Gew.-ppm, Rest-Si-OH als Verunreinigung enthalten.

Die erfindungsgemäß eingesetzten Verbindungen (D3) haben ein Gewichtsmittel Mw von bevorzugt 1000 bis 3000 g/mol, besonders bevorzugt 1250 bis 2000 g/mol.

Bei den Organosiliciumverbindungen (D3) handelt es sich um handelsübliche Produkte bzw. können sie nach in der Siliciumchemie gängigen Methoden hergestellt werden. Beispielsweise können die erfindungsgemäß eingesetzten Verbindungen (D3) durch Hydrolyse von Alkyltetraalkoxysilanen und anschließende Co-Kondensation mit Trimethylsilanol hergestellt werden. Bevorzugt werden sie aus Tetraethylsilikaten und Trimethylsilanol hergestellt.

Falls zur Herstellung der erfindungsgemäßen Massen Komponente (D3) eingesetzt wird, handelt es sich um Mengen von vorzugsweise 0,01 bis 50 Gewichtsteilen, besonders bevorzugt 0,1 bis 20 Gewichtsteilen, insbesondere 1 bis 10 Gewichtsteilen, jeweils bezogen auf 100 Gewichtsteile Komponente (A).

Zur Herstellung der erfindungsgemäßen Massen können Verbindungen (D3) direkt eingesetzt werden oder im Gemisch mit niedrigsiedenden organischen Lösungsmitteln, wie Alkoholen oder Toluol. Falls Verbindungen (D3) im Gemisch mit organischen Lösungsmitteln eingesetzt werden, was nicht bevorzugt ist, handelt es sich um Mengen von bevorzugt maximal 10 Gew.-%, bezogen auf das Gesamtgewicht des Gemisches.

Als Komponente (D) können nun ausschließlich Verbindungen (D1) oder ausschließlich Verbindungen (D2) oder ausschließlich Verbindungen (D3) oder Gemische aus mindestens zwei der Verbindungen (D1), (D2) und (D3) eingesetzt werden, wobei als Komponente (D) bevorzugt ausschließlich Verbindungen (D1), (D2) oder (D3) oder Gemische aus Verbindungen (D1) und (D2) oder Gemische aus (D2) und (D3), besonders bevorzugt ausschließlich (D1) oder ausschließlich (D2) oder Gemische von (D1) und (D2), eingesetzt werden.

Zusätzlich zu den Komponenten (A), gegebenenfalls (B), (C) und (D) können die erfindungsgemäßen Massen nun alle Stoffe enthalten, die auch bisher in durch Kondensationsreaktion vernetzbaren Massen eingesetzt worden sind, wie z.B. Katalysatoren (E), Füllstoffe (F), Weichmacher (G), Haftvermittler (H), Stabilisatoren (J) und Additive (L), wobei Komponenten (F), (G), (H), (J) und (L) verschieden sind zu Komponenten (A), (B), (C) und (D) .

Zur Bereitung der erfindungsgemäßen vernetzbaren Massen werden vorzugsweise Katalysatoren (E) eingesetzt. Dabei kann es sich um beliebige Kondensationskatalysatoren handeln, die auch bisher in unter Ausschluss von Wasser lagerfähigen, bei Zutritt von Wasser bei Raumtemperatur zu Elastomeren vernetzenden Massen vorliegen konnten.

Beispiele für solche Kondensationskatalysatoren (E) sind organische Verbindungen von Calcium, Strontium, Barium, Kupfer, Silber, Zinn, Zink, Zirkonium, Titan, Bismut, Blei, Eisen und Aluminium. Bevorzugt unter diesen Kondensationskatalysatoren sind Alkyltitanate, Alkylzirkonate Zinkcarboxylate, Titanchelate und organische Zinnverbindungen, wie Di-n-butylzinndiacetat, Di-n-butylzinndilaurat, Di-n-octylzinndiacetat, Di-n-octylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat oder Diorganozinnoxid, wobei in diesen Umsetzungsprodukten alle Valenzen der Zinnatome durch Sauerstoffatome der Gruppierung =SiOSn= bzw. durch SnCgebundene, einwertige organische Reste abgesättigt sind. Weitere Beispiele für Kondensationskatalysatoren (E) sind basische organische Verbindungen wie beispielsweise Diazabicycloundecen, Diazabicyclononan, Guanidinverbindungen wie Tetramethylguanidin, Triazabicyclodecen oder N-Methyltriazabicyclodecen.

Bevorzugt handelt es sich bei den Katalysatoren (E) um organische Dialkylzinncarboxylate oder deren Umsetzungsprodukte mit Alkoxysilanen, wie z.B. Dioctylzinndilaurat, Alkyltitanate oder Alkylzirkonate, Titanchelate wie Diisobutoxy-bis ethylacetoacetato titanate, sowie Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat oder Diorganozinnoxid.

Falls die erfindungsgemäßen Massen Katalysator (E) enthalten, handelt es sich um Mengen von vorzugsweise 0,0001 bis 2 Gewichtsteilen, bevorzugt 0,001 bis 1,5 Gewichtsteilen, jeweils bezogen auf 100 Gewichtsteile der erfindungsgemäßen Masse.

Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Talkum, Kaolin, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefälltes Calciumcarbonat, Ruß, wie Furnace- und Acetylenruß und Silicium-Aluminium-Mischoxide großer BET-Oberflächen; faserförmige Füllstoffe, wie Asbest sowie Kunststofffasern. Die genannten Füllstoffe können hydrophobiert sein, beispielsweise durch die Behandlung mit Organosilanen bzw. -siloxanen oder durch Veretherung von Hydroxylgruppen zu Alkoxygruppen. Falls Füllstoffe (F) eingesetzt werden, handelt es sich bevorzugt um hydrophile pyrogene Kieselsäure, gefälltes oder gemahlenes Calciumcarbonat, Talkum und Marmormehl.

Falls die erfindungsgemäßen Massen Komponente (F) enthalten, handelt es sich um Mengen von vorzugsweise 5 bis 200 Gewichtsteilen, bevorzugt 8 bis 125 Gewichtsteilen, jeweils bezogen auf 100 Gewichtsteile Komponente (A). Die erfindungsgemäßen Massen enthalten bevorzugt Komponente (F).

Bevorzugt handelt es sich bei dem gegebenenfalls eingesetzten Weichmacher (G) um Silikonöle, die von Komponente (A) verschieden sind, mit Viskositäten zwischen 5 und 10 000 mPas bei 25 °C oder Kohlenwasserstoffgemische mit Viskositäten zwischen 1 und 20 mPas bei 40 °C, besonders bevorzugt mit Viskositäten zwischen 2 und 7 mPas bei 40 °C.

Falls bei dem erfindungsgemäßen Verfahren Weichmacher (G) eingesetzt werden, handelt es sich um Mengen von bevorzugt 5 bis 100 Gewichtsteilen, besonders bevorzugt 15 bis 70 Gewichtsteilen, jeweils bezogen auf 100 Gewichtsteile Komponente (A). Erfindungsgemäß werden bevorzugt Weichmacher (G) eingesetzt.

Bei dem in den erfindungsgemäßen Massen gegebenenfalls eingesetzten Haftvermittler (H) kann es sich um Silane und Organopolysiloxane mit funktionellen Gruppen, wie beispielsweise solche mit Amino-, Glycidoxypropyl-, Ureidopropyl- oder Methacryloxypropylresten handeln. Beispiele für Haftvermittler (H) sind amino-alkylfunktionelle Silane, wie 3-Aminopropyltriethoxysilan, 3-(2-Aminoethyl)-Aminopropyltriethoxysilan, Aminopropyltrimethoxysilan, 3-(2-Aminoethyl)-Aminopropyltrimethoxysilan, Epoxysilane, wie Glycidoxypropyltrimethoxysilane, Glycidoxypropylmethyldimethoxysilan, Glycidoxypropyltriethoxysilan oder Glycidoxypropyl-methyldiethoxysilan, 2-(3-Triethoxysilylpropyl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilylmethyl)-harnstoff, N-(3-Triethoxysilylmethyl)-harnstoff, N-(3-Methyldiethoxysilylmethyl)harnstoff, O-Methylcarbamatomethylmethyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethyl-methyldimethoxysilane, Acryloxymethyl-triethoxysilan und Acryloxymethyl-methyldiethoxysilan sowie deren Teilkondensate.

Falls die erfindungsgemäßen Massen Komponente (H) enthalten, handelt es sich um Mengen von vorzugsweise 0,2 bis 4 Gewichtsteilen, bevorzugt 1 bis 2,5 Gewichtsteilen, jeweils bezogen auf 100 Gewichtsteile Komponente (A). Die erfindungsgemäßen Massen enthalten bevorzugt Komponente (H).

Beispiele für die zur Herstellung der erfindungsgemäßen vernetzbaren Massen gegebenenfalls eingesetzten Stabilisatoren (J) sind saure Phosphorsäureester, Phosphonsäuren und saure Phosphonsäureester.

Falls die erfindungsgemäßen Massen Komponente (J) enthalten, handelt es sich um Mengen von vorzugsweise 0,01 bis 1 Gewichtsteilen, bezogen auf 100 Gewichtsteile Komponente (A). Die erfindungsgemäßen Massen enthalten bevorzugt Komponente (J).

Beispiele für gegebenenfalls eingesetzte Additive (L) sind Fungizide, Farbstoffe, Pigmente, Hitzestabilisatoren, Oxidationsinhibitoren, organische Lösungsmittel, Mittel zur Beeinflussung der elektrischen Eigenschaften, wie leitfähiger Ruß, flammabweisend machende Mittel und Lichtschutzmittel.

Falls die erfindungsgemäßen Massen Komponente (L) enthalten, handelt es sich um Mengen von vorzugsweise 0,01 bis 30 Gewichtsteilen, bevorzugt 0,05 bis 2 Gewichtsteilen, jeweils bezogen auf 100 Gewichtsteile Komponente (A). Die erfindungsgemäßen Massen enthalten bevorzugt Komponente (L).

Bei den zur Bereitung der erfindungsgemäßen vernetzbaren Massen eingesetzten Komponenten kann es sich jeweils um eine Art einer solchen Komponente wie auch um ein Gemisch aus mindestens zwei Arten einer jeweiligen Komponente handeln.

Bevorzugt handelt es sich bei den erfindungsgemäßen Massen um solche, herstellbar unter Verwendung von
(A) Organosiliciumverbindungen enthaltend Einheiten der Formel (I),
(C) Silanen der Formel (II),
(D) Organosiliziumverbindungen ausgewählt aus den Verbindungen (D1), (D2), (D3) oder deren Kombinationen,
(E) gegebenenfalls Katalysatoren,
(F) gegebenenfalls Füllstoffe
(G) gegebenenfalls Weichmacher
(H) gegebenenfalls Haftvermittler
(J) gegebenenfalls Stabilisatoren und
(L) gegebenenfalls Additiven.

Besonders bevorzugt handelt es sich bei den erfindungsgemäßen vernetzbaren Massen um solche, herstellbar unter Verwendung von
(A) Organosiliciumverbindungen bestehend aus Einheiten der Formel (I),
(C) Silanen der Formel (II) mit d gleich 1 und Rest R⁷ gleich Alkylreste mit 1 bis 6 Kohlenstoffatomen,
(D) Organosiliziumverbindungen (D1) mit m gleich 1 und Rest R⁸ gleich Methylrest,
(E) gegebenenfalls Katalysatoren,
(F) pyrogener Kieselsäure,
(G) gegebenenfalls Weichmacher,
(H) Haftvermittler und
(J) gegebenenfalls Stabilisator.

Eine weitere besonders bevorzugte vernetzbare Masse ist herstellbar unter Verwendung von
(A) Organosiliciumverbindungen bestehend aus Einheiten der Formel (I),
(C) Silanen der Formel (II) mit d gleich 1 und Rest R⁷ gleich Alkylreste mit 1 bis 6 Kohlenstoffatomen,
(D) einer Mischung von Organosiliziumverbindungen (D1) mit m gleich 1 und Rest R⁸ gleich Methylrest sowie (D2) mit R¹⁰ gleich Ethylrest und R¹¹ gleich -CH₂-CH₂-,
(E) gegebenenfalls Katalysatoren,
(F) pyrogener Kieselsäure,
(G) gegebenenfalls Weichmacher,
(H) Haftvermittler und
(J) gegebenenfalls Stabilisator.

Eine weitere besonders bevorzugte vernetzbare Masse ist herstellbar unter Verwendung von
(A) Organosiliciumverbindungen bestehend aus Einheiten der Formel (I),
(C) Silanen der Formel (II) mit d gleich 1 und Rest R⁷ gleich Methylrest,
(D) einer Mischung von Organosiliziumverbindungen (D3) mit R⁸ gleich Methylrest und R⁹ gleich Ethylrest sowie (D2) mit R¹⁰ gleich Ethylrest und R¹¹ gleich -CH₂-CH₂-,
(E) gegebenenfalls Katalysatoren,
(F) gegebenenfalls pyrogener Kieselsäure,
(G) gegebenenfalls Weichmacher,
(H) gegebenenfalls Haftvermittler sowie
(J) gegebenenfalls Stabilisatoren.

Eine weitere besonders bevorzugte vernetzbare Masse ist herstellbar unter Verwendung von
(A) Organosiliciumverbindungen bestehend aus Einheiten der Formel (I),
(C) Silanen der Formel (II) mit d gleich 1 und Rest R⁷ gleich Methylrest,
(D) Organosiliziumverbindungen (D3) mit R⁸ gleich Methylrest und R⁹ gleich Ethylrest,
(E) gegebenenfalls Katalysatoren,
(F) gegebenenfalls pyrogener Kieselsäure,
(G) gegebenenfalls Weichmacher,
(H) gegebenenfalls Haftvermittler sowie
(J) gegebenenfalls Stabilisatoren.

Eine weitere besonders bevorzugte vernetzbare Masse ist herstellbar unter Verwendung von
(A) Organosiliciumverbindungen bestehend aus Einheiten der Formel (I),
(C) Silanen der Formel (II) mit d gleich 1 und Rest R⁷ gleich Methylrest,
(D) Organosiliziumverbindungen (D2) mit R¹⁰ gleich Ethylrest und R¹¹ gleich -CH₂-CH₂-,
(E) gegebenenfalls Katalysatoren,
(F) pyrogener Kieselsäure,
(G) gegebenenfalls Weichmacher,
(H) Haftvermittler sowie
(J) gegebenenfalls Stabilisatoren.

Eine weitere besonders bevorzugte vernetzbare Masse ist herstellbar unter Verwendung von
(A) Organosiliciumverbindungen bestehend aus Einheiten der Formel (I),
(B) Silanen der Formel R¹₂NCR⁴₂SiR³ (OR²)₂ mit R¹ gleich Alkylresten mit 1 bis 6 Kohlenstoffatomen und R² gleich Alkylresten mit 1 bis 4 Kohlenstoffatomen,
(C) Silanen der Formel (II) mit d gleich 1 und Rest R⁷ gleich Alkylreste mit 1 bis 6 Kohlenstoffatomen,
(D) Organosiliziumverbindungen (D1) mit m gleich 1 und Rest R⁸ gleich Methylrest und R⁹ gleich Ethylrest,
(E) gegebenenfalls Katalysatoren,
(F) pyrogener Kieselsäure,
(G) gegebenenfalls Weichmacher,
(H) Haftvermittler sowie
(J) gegebenenfalls Stabilisatoren.

Eine weitere besonders bevorzugte vernetzbare Masse ist herstellbar unter Verwendung von
(A) Organosiliciumverbindungen bestehend aus Einheiten der Formel (I),
(B) Silanen der Formel R¹₂NCR⁴₂SiR³(OR²)₂ mit R¹ gleich Alkylresten mit 1 bis 6 Kohlenstoffatomen und R² gleich Alkylresten mit 1 bis 4 Kohlenstoffatomen,
(C) Silanen der Formel (II) mit d gleich 1 und Rest R⁷ gleich Alkylreste mit 1 bis 6 Kohlenstoffatomen,
(D) Einer Mischung von Organosiliziumverbindungen (D1) mit m gleich 1 und Rest R⁸ gleich Methylrest sowie (D2) mit R¹⁰ gleich Ethylrest und R¹¹ gleich -CH₂-CH₂-,
(E) gegebenenfalls Katalysatoren,
(F) pyrogener Kieselsäure,
(G) gegebenenfalls Weichmacher,
(H) Haftvermittler sowie
(J) gegebenenfalls Stabilisatoren.

Eine weitere besonders bevorzugte vernetzbare Masse ist herstellbar unter Verwendung von
(A) Organosiliciumverbindungen bestehend aus Einheiten der Formel (I),
(B) Silanen der Formel R¹₂NCR⁴₂SiR³(OR²)₂ mit R¹ gleich Alkylresten mit 1 bis 6 Kohlenstoffatomen und R² gleich Alkylresten mit 1 bis 4 Kohlenstoffatomen
(C) Silanen der Formel (II) mit d gleich 1 und Rest R⁷ gleich Alkylreste mit 1 bis 6 Kohlenstoffatomen,
(D) einer Mischung von Organosiliziumverbindungen (D3) mit R⁸ gleich Methylrest und R⁹ gleich Ethylrest sowie (D2) mit R¹⁰ gleich Ethylrest und R¹¹ gleich -CH₂-CH₂-,
(E) gegebenenfalls Katalysatoren,
(F) pyrogener Kieselsäure,
(G) gegebenenfalls Weichmacher,
(H) Haftvermittler sowie
(J) gegebenenfalls Stabilisatoren.

Eine weitere besonders bevorzugte vernetzbare Masse ist herstellbar unter Verwendung von
(A) Organosiliciumverbindungen bestehend aus Einheiten der Formel (I) herstellbar durch Umsetzung von Organosiliciumverbindungen mit mindestens zwei OH-Gruppen (A0) mit Silanen (B) und Silanen (C') der Formeln R³Si(OR²)₃ oder Si(OR²)₄ gegebenenfalls in Anwesenheit von Katalysator (K) sowie gegebenenfalls weiteren Stoffen,
(C) Silanen der Formel (II) mit d gleich 1 und Rest R⁷ gleich Alkylreste mit 1 bis 6 Kohlenstoffatomen,
(D) Einer Mischung von Organosiliziumverbindungen (D1) mit m gleich 1 und Rest R⁸ gleich Methylrest sowie (D2) mit R¹⁰ gleich Ethylrest und R¹¹ gleich -CH₂-CH₂-,
(E) gegebenenfalls Katalysatoren,
(F) pyrogener Kieselsäure,
(G) gegebenenfalls Weichmacher,
(H) Haftvermittler sowie
(J) gegebenenfalls Stabilisatoren.

Besonders bevorzugt handelt es sich bei den erfindungsgemäßen vernetzbaren Massen um solche, herstellbar unter Verwendung von
(A) Organosiliciumverbindungen bestehend aus Einheiten der Formel (I),
(C) Silanen der Formel (II) mit d gleich 1 und Rest R⁷ gleich Alkylreste mit 1 bis 6 Kohlenstoffatomen,
(D) Organosiliziumverbindungen (D1) mit m gleich 1 und Rest R⁸ gleich Methylrest,
(E) gegebenenfalls Katalysatoren,
(F) Kreide,
(G) gegebenenfalls Weichmacher,
(H) Haftvermittler sowie
(J) gegebenenfalls Stabilisatoren.

Die erfindungsgemäßen Massen enthalten bevorzugt keine Isocyanate. Falls die erfindungsgemäßen Massen Isocyanate enthalten, handelt es sich um Mengen von bevorzugt maximal 25 Mol-%, besonders bevorzugt 0 bis 10 Mol-%, jeweils bezogen auf die molare Menge der Einheiten [R¹₂NCR⁴₂]Si= mit R¹ und R⁴ gleich der oben angegebenen Bedeutung.

Besonders bevorzugt werden zur Herstellung der erfindungsgemäßen Massen keine über die Komponenten (A) bis (L) hinausgehende Bestandteile eingesetzt.

Die erfindungsgemäßen Organopolysiloxanzusammensetzungen haben eine Viskosität von bevorzugt 100 bis 1 000 000 mPa·s, besonders bevorzugt von 1000 bis 500 000 mPa·s, insbesondere von 10 000 bis 250 000 mPa·s, jeweils gemessen bei 25 °C und einer Deformation von 100 % gemäß DIN 54458.

Die erfindungsgemäßen Massen können auf beliebige und bisher bekannte Art und Weise hergestellt werden, wie z.B. durch einfaches Vermischen der einzelnen Komponenten, wobei die als Komponente (A) eingesetzte erfindungsgemäße Organopolysiloxanzusammensetzung in situ hergestellt werden kann. Bevorzugt ist die vorherige Herstellung von Komponente (A) mit einer Vorlaufzeit von mindestens 30 Minuten, was bevorzugt durch eine Pufferstrecke oder einem Puffertank realisiert wird.

Ein weiterer Gegenstand der vorliegenden Erfindung ist ein Verfahren zur Herstellung der erfindungsgemäßen Organopolysiloxanzusammensetzungen durch Mischen der einzelnen Komponenten in beliebiger Reihenfolge.

Das erfindungsgemäße Vermischen kann bei Raumtemperatur und dem Druck der umgebenden Atmosphäre, also etwa 900 bis 1100 hPa, oder unter vermindertem Druck von etwa 20 hPa bis 800 hPa erfolgen. Falls erwünscht, kann dieses Vermischen aber auch bei höheren Temperaturen erfolgen, z.B. bei Temperaturen im Bereich von 35 bis 135 °C. Falls gewünscht, kann geheizt oder gekühlt werden.

Nach einer bevorzugten Verfahrensweise des erfindungsgemäßen Verfahrens werden in einem
ersten Schritt
Organosiliciumverbindungen mit mindestens zwei OH-Gruppen (A0) mit Silanen (B), Silanen (C') und gegebenenfalls Katalysator (K) sowie gegebenenfalls Weichmacher (G) vermischt und reagieren gelassen und anschließend in einem
zweiten Schritt
die im ersten Schritt erhaltene Reaktionsmasse mit Silanen (C), Organosiliciumverbindungen (D), sowie gegebenenfalls weiteren Komponenten ausgewählt aus den Komponenten (E) bis (L) vermischt.

Nach einer weiteren bevorzugten Verfahrensweise des erfindungsgemäßen Verfahrens wird im zweiten Schritt, bevorzugt nach Zugabe der Komponenten (F) und gegebenenfalls weiterer Komponenten (G), (H), (J) und (L), ein oder mehrere Entgasungsschritte erfolgen.

Das erfindungsgemäße Vermischen der einzelnen Komponenten findet bevorzugt unter weitestgehendem Ausschluss von Wasser aus der umgebenden Atmosphäre statt, was z.B. durch Überschleierung mit trockener Luft oder trockenem Stickstoff realisiert werden kann.

Das erfindungsgemäße Verfahren kann als sog. Eintopfreaktion in einem Reaktionsgefäß durchgeführt werden. Es können aber auch die einzelnen Schritte des erfindungsgemäßen Verfahrens separat durchgeführt werden.

Während der erfindungsgemäßen Umsetzung entstehen Spaltprodukte der Formeln R²-OH und gegebenenfalls R⁷-OH, die in der Reaktionsmasse verbleiben oder nach bekannten Methoden entfernt werden können, wobei R² und R⁷ die obengenannte Bedeutung haben.

Das erfindungsgemäße Verfahren kann sowohl kontinuierlich als auch diskontinuierlich durchgeführt werden.

Das erfindungsgemäße Verfahren hat den Vorteil, dass es schnell und einfach in der Durchführung ist, wobei leicht verfügbare Rohstoffe als Edukte eingesetzt werden können.

Die erfindungsgemäßen Massen haben den Vorteil, dass sie im Wesentlichen frei von Isocyanaten sind.

Die erfindungsgemäßen Massen haben den Vorteil, dass die in den vernetzbaren Massen eingesetzten Polymere eine stabile Viskosität aufweisen und die eingesetzten Polymere gut verträglich sind mit unterschiedlichen Katalysatorsystemen.

Die erfindungsgemäßen Massen haben den Vorteil, dass sie eine ausgezeichnete Lagerstabilität aufweisen.

Die erfindungsgemäßen Massen haben den Vorteil, dass das resultierende Elastomer eine sehr hohe Stabilität unter Klima-Stresslagerungen aufweist.

Die erfindungsgemäßen Massen haben den Vorteil, dass sie gut verarbeitbar sind, insbesondere hinsichtlich des leichteren Extrusionsverhaltens aus Gebinden, wie Kartuschen.

Des Weiteren haben die erfindungsgemäßen vernetzbaren Massen den Vorteil, dass sie sich durch eine hohe Vernetzungsgeschwindigkeit auszeichnen.

Insbesondere haben die erfindungsgemäßen vernetzbaren Massen den Vorteil, dass der Modul in den Vernetzungsprodukten leicht und in weiten Grenzen justiert werden kann.

Des Weiteren haben die erfindungsgemäßen vernetzbaren Massen den Vorteil, dass Polymer (A) mit einem niedrigen Anteil von kettenverlängernden Silanen hergestellt werden kann und damit niedrigere Anteile von Spaltprodukten erzeugt werden.

Für die Vernetzung der erfindungsgemäßen Massen reicht der übliche Wassergehalt der Luft aus. Die Vernetzung kann, falls erwünscht, auch bei höheren oder niedrigeren Temperaturen als Raumtemperatur, z.B. bei -5 bis 10 °C oder bei 30 bis 50 °C, durchgeführt werden. Die Vernetzung wird bevorzugt bei einem Druck der umgebenden Atmosphäre durchgeführt, also etwa 900 bis 1100 hPa.

Ein weiterer Gegenstand der vorliegenden Erfindung sind Formkörper, hergestellt durch Vernetzung der erfindungsgemäßen Massen.

Die erfindungsgemäßen vernetzbaren Massen können für alle Zwecke eingesetzt werden, für die auch bisher durch Kondensationsreaktion bei Raumtemperatur vernetzbare Massen eingesetzt worden sind. Sie eignen sich somit ausgezeichnet beispielsweise als Abdichtungsmassen für Fugen, einschließlich senkrecht verlaufender Fugen, und ähnlichen Leerräumen, z.B. von Gebäuden, Land-, Wasser- und Luftfahrzeugen, oder als Klebstoffe oder Verkittungsmassen, z.B. im Fensterbau oder bei der Herstellung von Vitrinen, sowie zur Herstellung von Schutzüberzügen oder von gummielastischen Formkörpern sowie für die Isolierung von elektrischen oder elektronischen Vorrichtungen. Insbesondere geeignet sind die erfindungsgemäßen RTV-Massen als niedermodulige Abdichtungsmassen für Fugen mit möglicher hoher Bewegungsaufnahme.

In den nachstehend beschriebenen Beispielen beziehen sich alle Angaben von Teilen mit Prozentsätzen, falls nicht anders angegeben, auf das Gewicht. Des Weiteren beziehen sich alle Viskositätsangaben auf eine Temperatur von 25 °C, falls nicht anders angegeben. Sofern nicht anders angegeben, werden die nachstehenden Beispiele bei einem Druck der umgebenden Atmosphäre, also bei etwa 1000 hPa, und Raumtemperatur, also bei etwa 20 °C, bzw. bei einer Temperatur, die sich beim Zusammengeben der Reaktanden bei Raumtemperatur ohne zusätzliche Heizung oder Kühlung einstellt, durchgeführt.

Im Rahmen der vorliegenden Erfindung werden die Viskositäten der Siloxane als solche, wie z.B. der Polymere P1 bis P8, wie folgt bestimmt: Die Messungen der dyn. Viskosität beruhen auf DIN 53019-1 am Platte-Kegel-Rotationsviskosimeter mit einem Kegel mit 50mm Durchmesser und einem Kegelwinkel von 2 bei 25 °C mit einer Scherrate von 1 1/s bis 10 1/s. Die Auswertung erfolgt über lineare Regression im linearen Bereich.

Die Viskositätsangaben und Pasteneigenschaften der erfindungsgemäßen vernetzbaren Massen beruhen auf der Messung nach DIN 54458 mit Hilfe des Amplitudensweeps. Gemessen wird über Platte-Platte mit einem Kegel mit 25mm Durchmesser und 0,5 mm Abstand bei einer Kreisfrequenz von 10Hz.

Viskosität η*(γ=0,1%): entspricht dem komplexen Viskositätswert [mPa*s] bei einer Deformation von 0,1 % gemäß DIN 54458, Viskosität η*(γ=100%): entspricht dem komplexen Viskositätswert [mPa*s] bei einer Deformation von 100 % gemäß DIN 54458.

Die gewichtsmittlere Molmasse M_{w} und zahlenmittlere Molmasse Mₙ werden dabei im Rahmen der vorliegenden Erfindung mittels Size Exclusion Chromatography (SEC) gegen Polystyrol-Standard, in THF, bei 60 °C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Bei der Herstellung der Polymere P1 bis P8 ist der Anteil Kettenverlängerung (KV) aus dem Molverhältnis von Komponente (B) zum SiOH-Gehalt von Komponente A0 errechnet.

Die Hautbildungszeit wird bestimmt als die Zeit, nach der an einem ausgebrachten Siliconstrang bei Berührung mit einem Bleistift der Härte HB an diesem kein Rückstand mehr anhaftet.

Die Frühfestigkeit wird ermittelt, indem auf einem 0,25mm Aluminiumblech mit einer Rakel ein Silikonstreifen von 10mm Breite und 6mm Höhe aufgebracht wird, dann in 30-Minuten Intervallen jeweils ein Probekörper um 90° geknickt wird. Angegeben wird die Zeit als Frühfestigkeit, die benötigt wird, bis der Silikonstreifen keinen Einriss mehr aufweist.

Die Shore-A-Härte wird nach DIN (Deutsche Industrie Norm) 53505-87 bestimmt.

Die Reißdehnung, Zugfestigkeit und Spannung bei 100 % Dehnung, wird nach DIN 53504-85S2 bestimmt.

Der 100 % Spannungswert entspricht dem Sekantenmodul bei einer Dehnung von 100 %.

Härte, Reißdehnung, 100% Spannungswert und Reißfestigkeit nach Klimastresslagerung bei 7d/70 °C/95 % r.LF werden bestimmt nach DIN 53505-87 bzw. DIN 53504-85S2, wobei die Probekörper zunächst für 14 Tage bei 23 °C/50 % rel. Luftfeuchtigkeit vulkanisieren und dann im Klimaschrank für 7 Tage bei 70 °C und 95 % rel. Luftfeuchtigkeit gelagert werden. Die Probekörper werden nach 1 Stunde Ruhezeit im Normklima 23 °C/50 % rel. Luftfeuchtigkeit gemäß Normvorgabe gemessen.

In den Beispielen werden die folgenden Abkürzungen bzw. Begriffe verwendet:
Me gleich Methylrest,
Et gleich Ethylrest,

Fließgrenze: entspricht der Schubspannung [Pa] am Punkt vom Wert tan d=1, an dem das Verhältnis von Verlustmodul zu Speichermodul gleich 1 ist.

### Herstellung von Polymer P1

420 Gewichtsteile eines α,ω-Dihydroxy-Dimethylpolysiloxans mit einer Viskosität von 80 000 mPa's werden mit einer Mischung aus 0,6 Gewichtsteilen eines Silans der Formel (CH₃CH₂)₂N-CH₂-Si(CH₃) (OCH₂CH₃)₂, 30 Gewichtsteile Methyltrimethoxysilan und 0,15 Gewichtsteile Zinkacetylacetonat in einem Planetenmischer vermischt. Die Viskosität der Polymermischung wurde in Zeitabhängigkeit bestimmt und in Tabelle 1 wiedergegeben.

### Herstellung von Polymer P2

420 Gewichtsteile eines α,ω-Dihydroxy-Dimethylpolysiloxans mit einer Viskosität von 80 000 mPa·s (OH-Gehalt 470 Gew.-ppm), werden mit einer Mischung von 0,45 Gewichtsteilen eines Silans der Formel (C₂H₅)₂N-CH₂-Si(CH₃)(OCH₂CH₃)₂, 14 Gewichtsteilen Vinyltrimethoxysilan sowie 0,07 Gewichtsteilen Zinkacetylacetonat in einem Planetenmischer homogenisiert. Die Viskosität der Polymermischung wurde in Zeitabhängigkeit bestimmt und in Tabelle 1 wiedergegeben.

### Herstellung von Polymer P3

420 Gewichtsteile eines α,ω-Dihydroxy-Dimethylpolysiloxans mit einer Viskosität von 80 000 mPa·s (OH-Gehalt 470 Gew.-ppm) werden mit einer Mischung aus 0,28 Gewichtsteilen eines Silans der Formel (CH₃CH₂)₂N-CH₂-Si(CH₃)(OCH₂CH₃)₂ sowie 30 Gewichtsteilen Methyltrimethoxysilan und 0,15 Gewichtsteilen Zinkacetylacetonat zur Katalyse zugegeben in einem Planetenmischer vermischt. Die Viskosität der Polymermischung wurde in Zeitabhängigkeit bestimmt und in Tabelle 1 wiedergegeben.

### Herstellung von Polymer P4

420 Gewichtsteile eines α,ω-Dihydroxy-Dimethylpolysiloxans mit einer Viskosität von 80 000 mPa·s (470 Gew.-ppm OH-Gehalt), werden mit einer Mischung von 0,19 Gewichtsteilen eines Silans der Formel (C₂H₅)₂N-CH₂-Si(CH₃)(OCH₂CH₃)₂, 14 Gewichtsteilen Vinyltrimethoxysilan, 4 Gewichtsteilen Methyltrimethoxysilan sowie 0,07 Gewichtsteilen Zinkbisacetylacetonat in einem Planetenmischer homogenisiert. Die Viskosität der Polymermischung wurde in Zeitabhängigkeit bestimmt und in Tabelle 1 wiedergegeben.

### Herstellung von Polymer P5

420 Gewichtsteile eines α,ω-Dihydroxy-Dimethylpolysiloxans mit einer Viskosität von 80 000 mPa·s (OH-Gehalt 470 Gew.-ppm) werden mit einer Mischung aus 0,1 Gewichtsteilen eines Silans der Formel (CH₃CH₂)₂N-CH₂-Si(CH₃)(OCH₂CH₃)₂ sowie 30 Gewichtsteilen Methyltrimethoxysilan und 0,15 Gewichtsteilen Zinkacetylacetonat zur Katalyse in einem Planetenmischer vermischt. Die Viskosität der Polymermischung wurde in Zeitabhängigkeit bestimmt und in Tabelle 1 wiedergegeben.

### Herstellung von Polymer P6

420 Gewichtsteile eines α,ω-Dihydroxy-Dimethylpolysiloxans mit einer Viskosität von 80 000 mPa·s werden mit einer Mischung aus 0,35 Gewichtsteilen eines Silans der Formel (CH₃CH₂)₂N-CH₂-Si(CH₃) (OCH₂CH₃)₂, 30 Gewichtsteilen Methyltrimethoxysilan und 0,15 Gewichtsteilen Zinkacetylacetonat in einem Planetenmischer vermischt. Die Viskosität der Polymermischung wurde in Zeitabhängigkeit bestimmt und in Tabelle 1 wiedergegeben.

### Herstellung von Polymer P7

420 Gewichtsteile eines α,ω-Dihydroxy-Dimethylpolysiloxans mit einer Viskosität von 80 000 mPa·s werden mit einer Mischung aus 0,35 Gewichtsteilen eines Silans der Formel (CH₃CH₂)₂N-CH₂-Si(CH₃) (OCH₂CH₃)₂, 0,3 Gewichtsteilen Cyclohexylisocyanat, 30 Gewichtsteilen Methyltrimethoxysilan und 0,15 Gewichtsteilen Zinkacetylacetonat in einem Planetenmischer vermischt. Die Viskosität der Polymermischung wurde in Zeitabhängigkeit bestimmt und in Tabelle 1 wiedergegeben.

### Herstellung von Polymer P8

420 Gewichtsteile eines α,ω-Dihydroxy-Dimethylpolysiloxans mit einer Viskosität von 80 000 mPa·s, werden mit einer Mischung von 14 Gewichtsteilen Vinyltrimethoxysilan, 4 Gewichtsteilen Methyltrimethoxysilan sowie 0,07 Gewichtsteilen Zinkacetylacetonat in einem Planetenmischer homogenisiert. Die Viskosität der Polymermischung wurde in Zeitabhängigkeit bestimmt und in Tabelle 1 wiedergegeben.

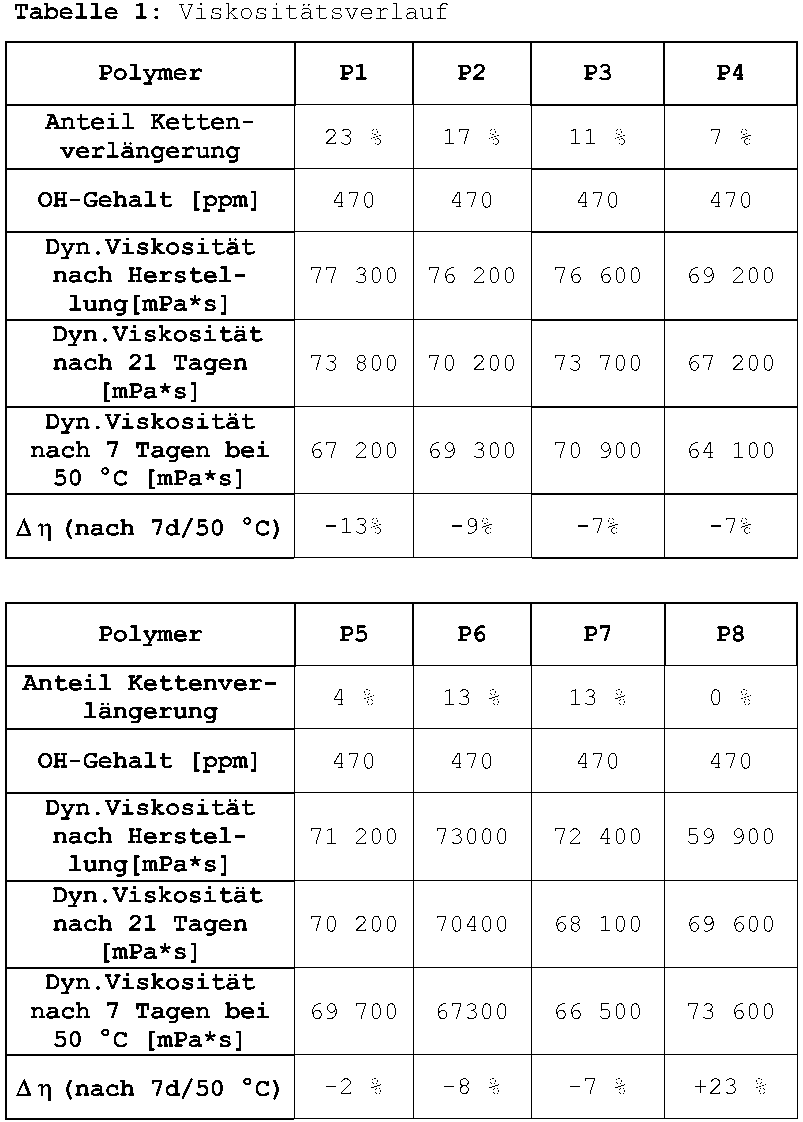

Die Beispiele zeigen eine gute Polymerstabilität der Polymere, das heißt geringe Viskositätsabweichungen nach 7 Tagen bei 50 °C.

Eine nicht erfindungsgemäße Vergleichsmischung P8 ohne Kettenverlängerer steigt hingegen in der Viskosität deutlich an. Die isocyanathaltige Mischung P7 zeigt keine nennenswerten Vorteile in der Viskositätsstabilität gegenüber P6.

### Beispiel 1

Nach 24 Stunden Reifezeit der oben hergestellten Polymere werden 230 g Polymer P1 mit 84 g eines trimethylsilylendständigen Dimethylpolysiloxans mit einer Viskosität von 1000 mPa·s vermischt, 3 g N-Aminoethyl-Aminopropyltrimethoxysilan und 4 g Vinyltrimethoxysilan zugegeben. Dazu wurden 3 g der Komponente (D1), bestehend aus 16,0 Mol-% Einheiten der Formel Me-Si (OEt)₂O_{1/2}, 46,4 Mol-% Einheiten der Formel MeSi (OEt) O_{2/2} und 36,5 Mol-% Einheiten der Formel MeSiO_{3/2} sowie 0,2 mol-% der Formel (Me)₂Si(OEt)O_{1/2} und 0,9 Mol-% der Formel Me₂SiO_{2/2} zugegeben. Anschließend werden 32 g einer pyrogenen Kieselsäure mit einer Oberfläche nach BET von 150 m²/g homogen eingemischt und 1 g eines Zinnkatalysators, der hergestellt wird durch Umsetzung von Di-n-butylzinndiacetat und Tetraethoxysilan, sowie 0,5 g Octylphosphonsäurezugegeben. Die Mischung wird für 5 Minuten bei einem Druck von 100 mbar entgast.

Die so erhaltene Masse wird rheologisch nach DIN54458 charakterisiert. Darüber hinaus werden die Elastomereigenschaften an 2mm-Vulkanisatfolien nach DIN53504 bestimmt. Die Folien werden hergestellt durch Vulkanisation einer 2mm Schicht auf PE-Folie aufgetragen bei 23 °C/50 % rel. Luftfeuchtigkeit.

Die Lagerstabilität wurde bestimmt, indem die Paste in Kartuschen bei 70 °C beschleunigt gealtert wurde.

Die Eigenschaften sind in Tabelle 2 aufgeführt.

### Beispiele 2 bis 6

Die in Beispiel 1 beschriebene Arbeitsweise wird jeweils wiederholt, mit der Abänderung, dass anstelle des Polymers P1 Polymere P2 bis P6 eingesetzt wurden. Die Ergebnisse finden sich in Tabelle 2.

### Beispiel 7

Die in Beispiel 1 beschriebene Ausführung wird wiederholt mit der Abänderung, dass anstelle von 3 g nur 2 g der Komponente (D1) bestehend aus 16,0 Mol-% Einheiten der Formel Me-Si(OEt)₂O_{1/2}, 46,4 Mol-% Einheiten der Formel MeSi(OEt)O_{2/2} und 36,5 Mol-% Einheiten der Formel MeSiO_{3/2}sowie 0,2 mol-% der Formel (Me)₂Si (OEt) O_{1/2} und 0,9 Mol-% der Formel Me₂SiO_{2/2} und zusätzlich 1 g Komponente (D2) (MeO)₃Si-CH₂-CH₂-Si(OMe)₃ eingesetzt wurden.

### Beispiel 8

Die in Beispiel 1 beschriebene Ausführung wird wiederholt mit der Abänderung, dass eine Kombination aus 1 Teil (D2) mit R¹⁰= Me und R¹¹= -CH₂-CH₂- sowie 2 Teilen (D3) mit 54 Mol-% MeSiO_{1/2}-Einheiten, 42 Mol-% SiO_{4/2}-Einheiten und 4 Mol-% Si(OEt)O_{3/2}-Einheiten eingesetzt wird.

### Vergleichsbeispiel V1

Die in Beispiel 1 beschriebene Arbeitsweise wird wiederholt, mit der Abänderung, dass Polymer P8 eingesetzt wird.

### Vergleichsbeispiel V2

Die in Beispiel 1 beschriebene Arbeitsweise wird wiederholt, mit der Abänderung, dass auf Komponente (D1) verzichtet wird.

### Vergleichsbeispiel V3

Die in Beispiel 6 beschriebene Arbeitsweise wird wiederholt, mit der Abänderung, dass auf Komponente (D1) verzichtet wird.

### Vergleichsbeispiel V4

Die in Vergleichsbeispiel V1 beschriebene Arbeitsweise wird wiederholt, mit der Abänderung, dass eine Polymerkomponente P9 analog zu P8 hergestellt wurde mit der Änderung, dass eine Mischung aus 280 Gewichtsteilen eines α,ω-Dihydroxy-Dimethylpolysiloxans mit einer Viskosität von 80 000 mPa·s und 140 Gewichtsteile eines α,ω-Dihydroxy-Dimethylpolysiloxans mit einer Viskosität von 350 000 mPa's eingesetzt wird.

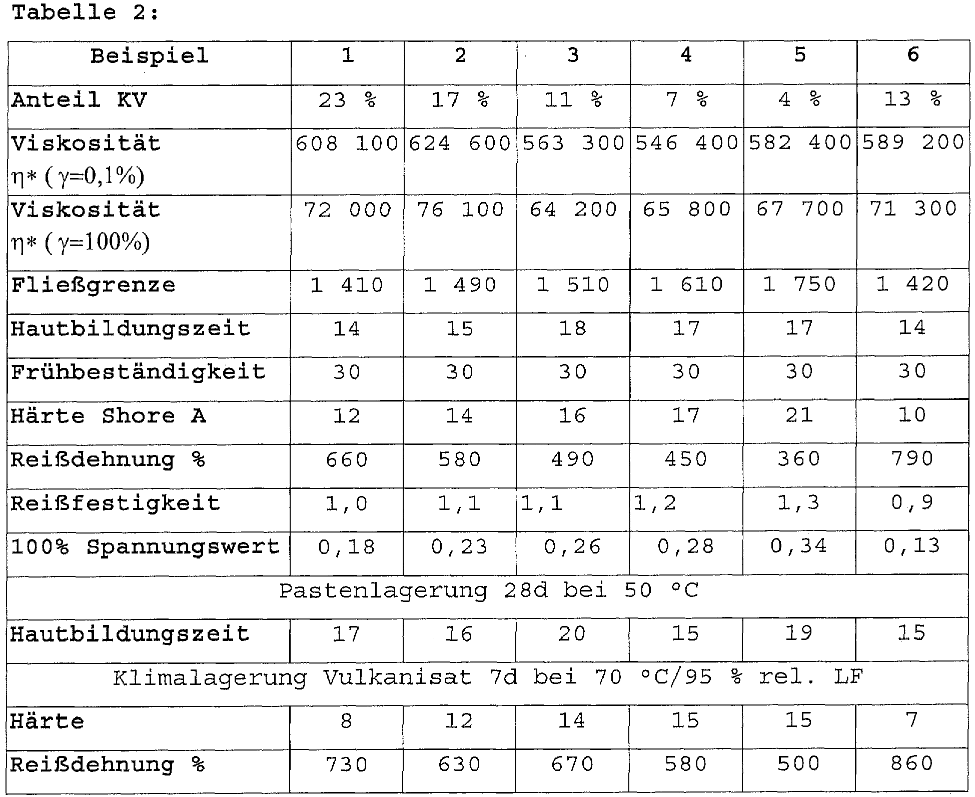

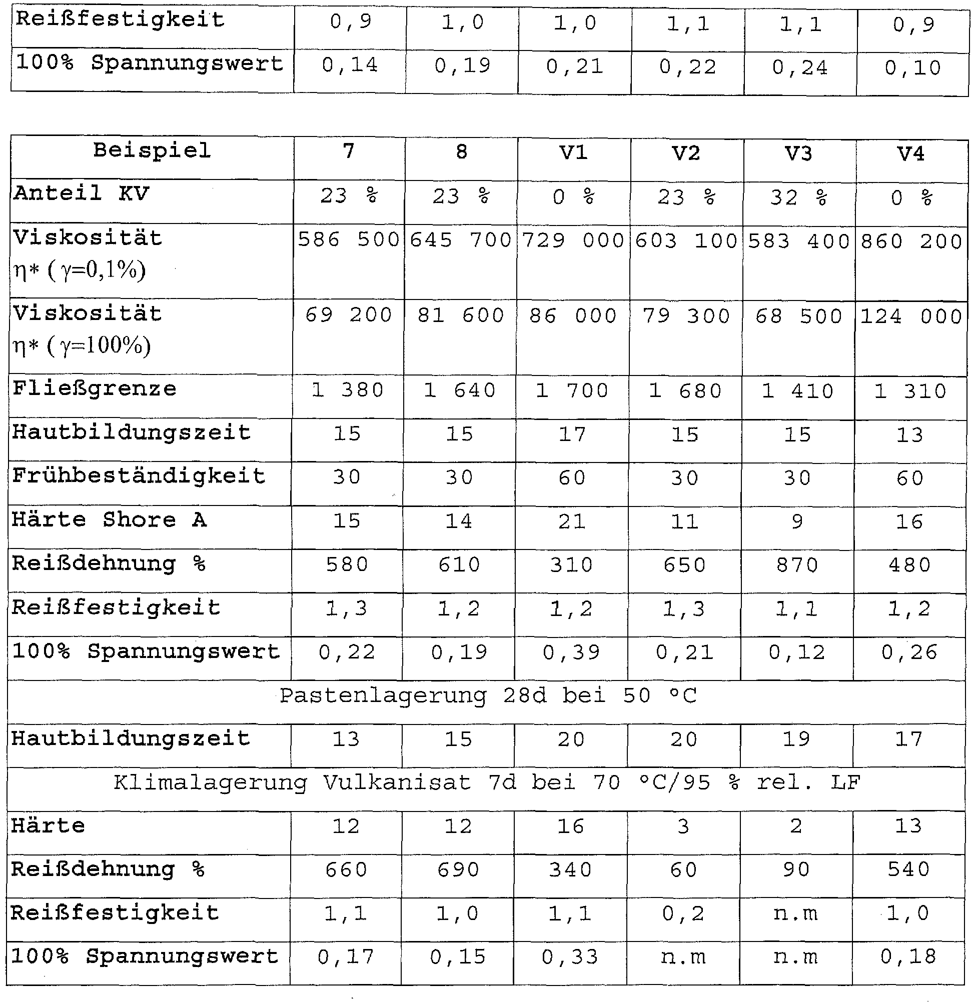

Die erfindungsgemäßen Massen können über einen weiten Bereich im Modul justiert werden

Die Stabilität der erfindungsgemäßen Massen nach Klimalagerung der Vulkanisate zeigt sich im Vergleich der Beispiele 7 und 8 gegenüber dem Vergleichsbeispiel V2 beziehungsweise V3 gegenüber Beispiel 6: Während die Anfangseigenschaften vergleichbar sind, so brechen die Elastomereigenschaften wie Härte, Reißfestigkeit, Reißdehnung und 100 % Spannungswert bei den nicht erfindungsgemäßen massiv ein.

Das verbesserte Verarbeitungsverhalten zeigt sich in der niedrigeren Viskosität η* bei γ=0,1% und γ=100% bei gleichzeitig hoher Fließgrenze.

Die hohe Vulkanisationsgeschwindigkeit zeigt sich in den kurzen Hautbildungszeiten sowie den kurzen Frühfestigkeiten.

Die Hautbildungszeiten sind stabil (siehe Tabelle), die Frühfestigkeiten nach Alterung der Pasten für 28d bei 50 °C sind unverändert.

## Patentansprüche

1. Vernetzbare Organopolysiloxanzusammensetzungen herstellbar unter Verwendung von
(A) Organosiliciumverbindungen enthaltend Einheiten der Formel
[R¹₂NCR⁴₂]_{b}SiR³_{c}(OR²)ₐO_{(4-a-b-c)/2} (I),
wobei
R¹ gleich oder verschieden sein kann und einen einwertigen, gegebenenfalls substituierten Kohlenwasserstoffrest bedeutet,
R² gleich oder verschieden sein kann und einen einwertigen, gegebenenfalls substituierten Kohlenwasserstoffrest bedeutet,
R³ gleich oder verschieden sein kann und einen einwertigen Kohlenwasserstoffrest bedeutet,
R⁴ gleich oder verschieden sein kann und Wasserstoffatom oder einen einwertigen, gegebenenfalls substituierten Kohlenwasserstoffrest bedeutet,
a gleich 0, 1, 2 oder 3 ist,
b 0, 1 oder 2 ist und
c 0, 1, 2 oder 3 ist,
mit der Maßgabe, dass Organosiliciumverbindung (A) mindestens eine Einheit der Formel (I) mit a=b=c=1 aufweist, in mindestens 50 % der Einheiten der Formel (I) die Summe a+b+c=2 ist und die Organosiliciumverbindung mindestens 2 Gruppen -OR² enthält,
gegebenenfalls (B) Silanen der Formel
R¹₂NCR⁴₂SiR³ (OR²)₂ (XI),
wobei R¹, R², R³ und R⁴ gleich oder verschieden sein können und eine der oben angegebenen Bedeutungen haben,
(C) Silanen der Formel
R⁶_{d}Si(OR⁷)_{4-d} (II)
und/oder deren Teilhydrolysate mit bis zu 10 Siliciumatomen, wobei
R⁶ eine für R³ angegebene Bedeutung hat,
R⁷ gleich oder verschieden sein kann und einen einwertigen, gegebenenfalls substituierten Kohlenwasserstoffrest oder einen Rest -N=CR⁵₂ bedeutet,
R⁵ gleich oder verschieden sein kann und eine für R² angegebene Bedeutung hat und
d 0 oder 1 ist,
und
(D) Organosiliciumverbindungen ausgewählt aus
(D1) Verbindungen enthaltend Einheiten der Formeln
R⁸ₘSi(OR⁹)₃₋ₘO_{1/2} (III),
R⁸ₘSi(OR⁹)₂₋ₘO_{2/2} (IV)
und
R⁸ₘSi(OR⁹)₁₋ₘO_{3/2} (V),
wobei
R⁸ gleich oder verschieden sein kann und jeweils unabhängig voneinander ein einwertiger Kohlenwasserstoffrest ist,
R⁹ gleich oder verschieden sein kann und jeweils unabhängig voneinander ein einwertiger Kohlenwasserstoffrest bedeutet und m jeweils unabhängig voneinander die Bedeutung von 0 oder 1 hat,
mit der Maßgabe, dass Verbindung (D1) pro Molekül mindestens 3 Gruppen -OR⁹ aufweist und ein gewichtsmittleres Molekulargewicht Mw von 1000 bis 3000 g/mol hat,
(D2) Verbindungen der Formel
(R¹⁰O)₃Si-R¹¹-Si(OR¹⁰)₃ (VII),
wobei
R¹⁰ gleich oder verschieden sein kann und einen einwertigen, gegebenenfalls substituierten Kohlenwasserstoffrest, der mit Heteroatomen unterbrochen sein kann, darstellt,
R¹¹ gleich oder verschieden sein kann und einen zweiwertigen, gegebenenfalls substituierten Kohlenwasserstoffrest, der mit Heteroatomen unterbrochen sein kann, darstellt,
und
(D3) Verbindungen enthaltend Einheiten der Formeln
R⁸₃SiO_{1/2} (XII),
SiO_{4/2} (VI)
und
R⁸ₘSi(OR⁹)₁₋ₘO_{3/2} (V)
sowie gegebenenfalls der Formeln (III) und (IV),
wobei
R⁸, R⁹ und m eine oben dafür angegebene Bedeutung hat,
mit der Maßgabe, dass m gleich 0 ist, Verbindung (D3) pro Molekül mindestens 3 Gruppen -OR⁹ aufweist und ein gewichtsmittleres Molgewicht Mw von 1000 bis 4000g/mol hat.

2. Organopolysiloxanzusammensetzungen gemäß Anspruch 1, **dadurch gekennzeichnet, dass** es sich bei Organosiliciumverbindungen (A) um solche handelt herstellbar durch Umsetzung von Organosiliciumverbindungen mit mindestens zwei OH-Gruppen (A0) mit Silanen (B) und Silanen (C') der Formel R³Si(OR²)₃ oder Si(OR²)₄ gegebenenfalls in Anwesenheit von Katalysator (K) sowie gegebenenfalls weiteren Stoffen, wobei R² und R³ eine der oben dafür angegebenen Bedeutungen haben.

3. Organopolysiloxanzusammensetzungen gemäß Anspruch 2, **dadurch gekennzeichnet, dass** Kettenverlängerer (B) in solchen Mengen eingesetzt wird, dass das molare Verhältnis von Komponente (B) zu Si-OH in Komponente (A0) kleiner 1 beträgt.

4. Organopolysiloxanzusammensetzungen gemäß einem oder mehreren der Ansprüche 1 bis 3, **dadurch gekennzeichnet, dass** es sich bei Rest R⁷ um Alkylreste mit 1 bis 6 Kohlenstoffatomen handelt.

5. Organopolysiloxanzusammensetzungen gemäß einem oder mehreren der Ansprüche 1 bis 4, **dadurch gekennzeichnet, dass** es sich bei Komponente (D) ausschließlich um Verbindungen (D1) oder ausschließlich um Verbindungen (D2) oder um Gemische aus Verbindungen (D1) und (D2) handelt.

6. Organopolysiloxanzusammensetzungen gemäß einem oder mehreren der Ansprüche 1 bis 5, **dadurch gekennzeichnet, dass** sie Isocyanate in Mengen von maximal 25 Mol-%, bezogen auf die molare Menge der Einheiten [R¹₂NCR⁴₂] Si≡, enthalten mit R¹ und R⁴ gleich der oben angegebenen Bedeutung.

7. Verfahren zur Herstellung der Organopolysiloxanzusammensetzungen gemäß einem oder mehreren der Ansprüche 1 bis 6 durch Mischen der einzelnen Komponenten in beliebiger Reihenfolge.

8. Formkörper, hergestellt durch Vernetzung der Organopolysiloxanzusammensetzungen gemäß einem oder mehreren der Ansprüche 1 bis 6 oder hergestellt gemäß Anspruch 7.

## Claims

1. Crosslinkable organopolysiloxane compositions producible using
(A) organosilicon compounds comprising units of the formula
[R¹₂NCR⁴₂]_{b}SiR³_{c}(OR²)ₐO_{(4-a-b-c)/2} (I),
where
R¹ may be identical or different and is a monovalent, optionally substituted hydrocarbyl radical,
R² may be identical or different and is a monovalent, optionally substituted hydrocarbyl radical,
R³ may be identical or different and is a monovalent hydrocarbyl radical,
R⁴ may be identical or different and is hydrogen atom or a monovalent, optionally substituted hydrocarbyl radical,
a is 0, 1, 2 or 3,
b is 0, 1 or 2, and
c is 0, 1, 2 or 3,
with the proviso that organosilicon compound (A) has at least one unit of the formula (I) where a=b=c=1, the sum is a+b+c=2 in at least 50% of the units of the formula (I), and the organosilicon compound contains at least 2 groups -OR²,
optionally (B) silanes of the formula
R¹₂NCR⁴₂SiR³(OR²)₂ (XI),
where R¹, R², R³, and R⁴ may be identical or different and have one of the definitions indicated above,
(C) silanes of the formula
R⁶_{d}Si (OR⁷)_{4-d} (II)
and/or their partial hydrolysates having up to 10 silicon atoms, where
R⁶ has a definition indicated for R³,
R⁷ may be identical or different and is a monovalent, optionally substituted hydrocarbyl radical or a radical -N=CR⁵₂,
R⁵ may be identical or different and has a definition indicated for R², and
d is 0 or 1,
and
(D) organosilicon compounds selected from
(D1) compounds comprising units of the formulae
R⁸ₘSi(OR⁹)₃₋ₘO_{1/2} (III),
R⁸ₘSi(OR⁹)₂₋ₘO_{2/2} (IV),
and
R⁸ₘSi(OR⁹)_{1-M}O_{3/2} (V),
where
R⁸ may be identical or different and in each case, independently of any other, is a monovalent hydrocarbyl radical,
R⁹ may be identical or different and in each case, independently of any other, is a monovalent hydrocarbyl radical, and
m in each case, independently of any other, has the definition of 0 or 1,
with the proviso that compound (D1) has at least 3 groups -OR⁹ per molecule and has a weight-average molecular weight Mw of 1000 to 3000 g/mol,
(D2) compounds of the formula
(R¹⁰O)₃Si-R¹¹-Si(OR¹⁰)₃ (VII),
where
R¹⁰ may be identical or different and is a monovalent, optionally substituted hydrocarbyl radical which may be interrupted by heteroatoms,
R¹¹ may be identical or different and is a divalent, optionally substituted hydrocarbyl radical which may be interrupted by heteroatoms,
and
(D3) compounds comprising units of the formulae
R⁸₃SiO_{1/2} (XII),
SiO_{4/2} (VI),
and
R⁸ₘSi(OR9)₁₋ₘO_{3/2} (V)
and also, optionally, of the formulae (III) and (IV),
where
R⁸, R⁹ and m have a definition indicated for them above, with the proviso that m is 0 and compound (D3) has at least 3 groups -OR⁹ per molecule and has a weight-average molar weight Mw of 1000 to 4000 g/mol.

2. Organopolysiloxane compositions according to Claim 1, **characterized in that** organosilicon compounds (A) are compounds preparable by reaction of organosilicon compounds having at least two OH groups (AO) with silanes (B) and silanes (C') of the formula R³Si(OR²)₃ or Si(OR²)₄, optionally in the presence of catalyst (K) and, optionally, of further substances, and R² and R³ have one of the definitions indicated for them above.

3. Organopolysiloxane compositions according to Claim 2, **characterized in that** chain extender (B) is used in amounts such that the molar ratio of component (B) to Si-OH in component (AO) is less than 1.

4. Organopolysiloxane compositions according to one or more of Claims 1 to 3, **characterized in that** radical R⁷ comprises alkyl radicals having 1 to 6 carbon atoms.

5. Organopolysiloxane compositions according to one or more of Claims 1 to 4, **characterized in that** component (D) comprises exclusively compounds (D1) or exclusively compounds (D2), or mixtures of compounds (D1) and (D2).

6. Organopolysiloxane compositions according to one or more of Claims 1 to 5, **characterized in that** it comprises isocyanates in amounts of not more than 25 mol%, based on the molar amount of the units [R¹₂NCR⁴₂]Si≡, where R¹ and R⁴ have the definition indicated above.

7. Process for producing the organopolysiloxane compositions according to one or more of Claims 1 to 6 by mixing the individual components in any desired order.

8. Shaped body produced by crosslinking the organopolysiloxane compositions according to one or more of Claims 1 to 6 or produced according to Claim 7.

## Revendications

1. Compositions réticulables d'organopolysiloxanes, pouvant être préparées à l'aide
(A) de composés organosiliciés contenant des unités de formule
[R¹₂NCR⁴₂]_{b}SiR³_{c}(OR²)ₐO_{(4-a-b-c)/2} (I),
dans laquelle
R¹ peut être identique ou différent et signifie un radical hydrocarboné monovalent, le cas échéant substitué,
R² peut être identique ou différent et signifie un radical hydrocarboné monovalent, le cas échéant substitué,
R³ peut être identique ou différent et signifie un radical hydrocarboné monovalent,
R⁴ peut être identique ou différent et signifie un atome d'hydrogène ou un radical hydrocarboné monovalent, le cas échéant substitué,
a vaut 0, 1, 2 ou 3,
b vaut 0, 1 ou 2 et
c vaut 0, 1, 2 ou 3,
à condition que le composé organosilicié (A) présente au moins une unité de formule (I) dans laquelle a=b=c=1, que dans au moins 50% des unités de formule (I) la somme a+b+c = 2 et que le composé organosilicié contienne au moins 2 groupes -OR²,
le cas échéant (B) de silanes de formule
R¹₂NCR⁴₂SiR³(OR²)₂ (XI),
dans laquelle R¹, R², R³ et R⁴ peuvent être identiques ou différents et présentent une des significations indiquées ci-dessus,
(C) de silanes de formule
R⁶_{d}Si(OR⁷)_{4-d} (II)
et/ou un de leurs hydrolysats partiels comprenant jusqu'à 10 atomes de silicium, dans laquelle
R⁶ a une signification indiquée pour R³
R⁷ peut être identique ou différent et signifie un radical hydrocarboné monovalent, le cas échéant substitué, ou signifie un radical -N=CR⁵₂,
R⁵ peut être identique ou différent et présente une signification indiquée pour R² et
d vaut 0 ou 1,
et
(D) de composés organosiliciés choisis parmi
(D1) des composés contenant des unités de formule
R⁸ₘSi(OR⁹)₃-mO_{1/2} (III),
R⁸ₘSi(OR⁹)₂₋ₘO_{2/2} (IV)
et
R^{a}ₘSi(OR⁹)₁₋ₘO_{3/2} (V),
dans lesquelles les radicaux
R⁸ peuvent être identiques ou différents et signifient à chaque fois indépendamment les uns des autres un radical hydrocarboné monovalent,
R⁹ peuvent être identiques ou différents et signifient à chaque fois indépendamment les uns des autres un radical hydrocarboné monovalent et
m représentent, à chaque fois indépendamment les uns des autres, 0 ou 1,
à condition que le composé (D1) présente par molécule au moins 3 groupes -OR⁹ et présente un poids moléculaire moyen en nombre de 1000 à 3000 g/mole,
(D2) des composés de formule
(R¹⁰O)₃Si-R¹¹-Si(OR¹⁰)₃ (VII),
dans laquelle
R¹⁰ peut être identique ou différent et représente un radical hydrocarboné monovalent, le cas échéant substitué, qui peut être interrompu par des hétéroatomes,
R¹¹ peut être identique ou différent et représente un radical hydrocarboné divalent, le cas échéant substitué, qui peut être interrompu par des hétéroatomes,
(D3) des composés contenant des unités des formules
R⁸₃SiO_{1/2} (XII),
SiO_{4/2} (VI)
et
R⁸ₘSi(OR⁹)₁₋ₘO_{3/2} (V)
ainsi que le cas échéant des formules (III) et (IV) dans lesquelles
R⁸, R⁹ et m présentent une signification indiquée ci-dessus pour ceux-ci, à condition que m vaille 0, que le composé (D3) présente par molécule au moins 3 groupes -OR⁹ et présente un poids moléculaire moyen en nombre de 1000 à 4000 g/mole.

2. Compositions d'organopolysiloxanes selon la revendication 1, **caractérisées en ce qu'**il s'agit, pour les composés organosiliciés (A) de composés pouvant être préparés par transformation de composés organosiliciés présentant au moins deux groupes OH (AO) avec des silanes (B) et des silanes (C') de formule R³Si(OR²)₃ ou Si (OR²)₄ le cas échéant en présence d'un catalyseur (K) ainsi que le cas échéant d'autres substances, R² et R³ présentant une des significations indiquées ci-dessus pour ceux-ci.

3. Compositions d'organopolysiloxanes selon la revendication 2, **caractérisées en ce que** l'agent d'allongement de chaîne (B) est utilisé en des quantités telles que le rapport molaire du composant (B) à Si-OH dans le composant (A0) soit inférieur à 1.

4. Compositions d'organopolysiloxanes selon l'une ou plusieurs des revendications 1 à 3, **caractérisées en ce qu'**il s'agit pour le radical R⁷ de radicaux alkyle comprenant 1 à 6 atomes de carbone.

5. Compositions d'organopolysiloxanes selon l'une ou plusieurs des revendications 1 à 4, **caractérisées en ce qu'**il s'agit, pour le composant (D), exclusivement de composés (D1) ou exclusivement de composés (D2) ou de mélanges de composés (D1) et (D2).

6. Compositions d'organopolysiloxanes selon l'une ou plusieurs des revendications 1 à 5, **caractérisées en ce qu'**elles contiennent des isocyanates en des quantités d'au maximum 25% en mole, par rapport à la quantité molaire des unités [R¹₂NCR⁴₂]Si≡, dans lesquelles R¹ et R⁴ présentent la signification indiquée ci-dessus.

7. Procédé pour la préparation des compositions d'organopolysiloxanes selon l'une ou plusieurs des revendications 1 à 6 par mélange des différents composants dans un ordre quelconque.

8. Corps façonné, préparé par réticulation des compositions d'organopolysiloxanes selon l'une ou plusieurs des revendications 1 à 6 ou préparés selon la revendication 7.
